(19) Europäisches Patentamt
European Patent Office
Office européen des brevets

(11) EP 3 678 243 A1

(12) **DEMANDE DE BREVET EUROPEEN**

(43) Date de publication:
**08.07.2020 Bulletin 2020/28**

(51) Int Cl.:
***H01M 8/026*** *(2016.01)* ***H01M 8/0263*** *(2016.01)*

(21) Numéro de dépôt: **20150330.7**

(22) Date de dépôt: **06.01.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **07.01.2019 FR 1900133**

(71) Demandeur: **COMMISSARIAT À L'ÉNERGIE ATOMIQUE ET AUX ÉNERGIES ALTERNATIVES**
**75015 Paris (FR)**

(72) Inventeur: **POIROT-CROUVEZIER, Jean-Philippe**
**38054 Grenoble cedex 9 (FR)**

(74) Mandataire: **Dupont, Jean-Baptiste**
**GIE Innovation Competence Group**
**310 Avenue Berthelot**
**69372 Lyon Cedex 08 (FR)**

(54) **PLAQUE DE MAINTIEN DE CELLULE ELECTROCHIMIQUE COMPORTANT UN RESEAU DE DISTRIBUTION FLUIDIQUE OPTIMISE**

(57) L'invention porte sur un procédé de fabrication d'une plaque de maintien d'une cellule électrochimique comportant un réseau de distribution (14) dont les canaux de distribution (13) présentent chacun une largeur locale $l_c(x)$, et sont séparés latéralement deux à deux par une nervure de séparation (17) de largeur locale $l_d(x)$, le rapport $l_d(x)/l_c(x)$ variant longitudinalement suivant un axe principal rectiligne Δ. Les canaux de distribution (13) s'étendent longitudinalement de manière à former des ondulations latérales, dans un plan principal parallèle à l'assemblage membrane électrode, présentant une demi-période longitudinale d(x) variant longitudinalement suivant l'axe principal Δ.

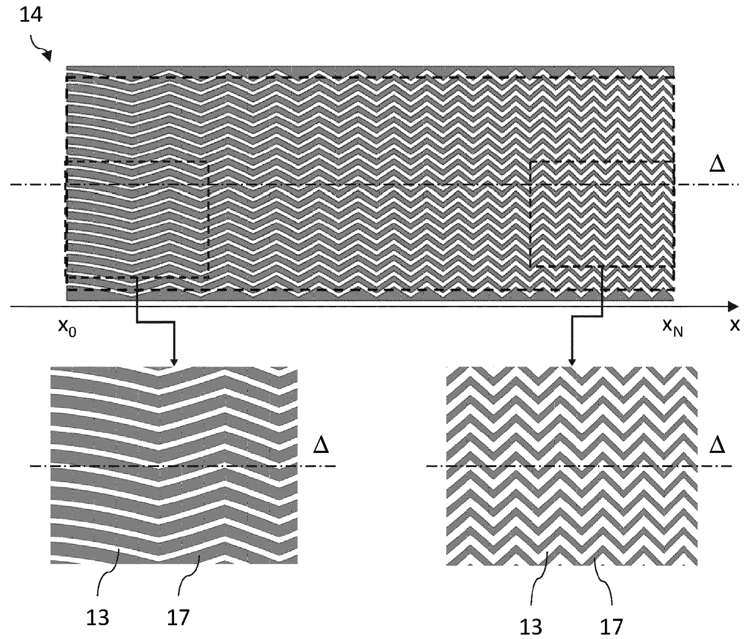


Fig.3A

EP 3 678 243 A1

## Description

### DOMAINE TECHNIQUE

Le domaine de l'invention est celui des réacteurs électrochimiques tels que les piles à combustible et les électrolyseurs, comportant au moins une cellule électrochimique formée d'un assemblage membrane électrodes maintenu par deux plaques de maintien opposées. L'invention porte plus particulièrement sur une telle plaque de maintien, laquelle comporte un réseau de distribution fluidique adapté à amener des gaz réactifs à l'assemblage membrane électrodes.

### ÉTAT DE LA TECHNIQUE ANTÉRIEURE

Une pile à combustible comporte habituellement un empilement de cellules électrochimiques dont chacune comprend une anode et une cathode séparées électriquement l'une de l'autre par une membrane électrolytique, les cellules étant le lieu d'une réaction électrochimique entre deux réactifs introduits de manière continue. L'empilement des électrodes et de la membrane électrolytique est appelé assemblage membrane électrodes (AME).

D'une manière générale, le combustible (par exemple de l'hydrogène) est apporté jusqu'à l'anode alors que le comburant (par exemple de l'oxygène contenu dans l'air) est amené à la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte contenu dans une membrane polymère, et un conducteur électronique formé par le circuit électrique externe. La cellule est ainsi le lieu de la réaction électrochimique : les gaz réactifs y sont apportés, les produits et les espèces non réactives en sont évacués, ainsi que la chaleur produite lors de la réaction.

La cellule électrochimique comporte deux plaques de maintien, entre lesquelles est disposé l'assemblage membrane électrodes. Les plaques de maintien sont appelées plaques bipolaires lorsque, dans un empilement de cellules électrochimiques, elles sont chacune au contact de l'anode d'une cellule sur une face, et de la cathode de la cellule adjacente sur l'autre face. Elles sont adaptées à assurer le maintien mécanique de l'assemblage membrane électrodes, la distribution fluidique des gaz réactifs au niveau des électrodes, et la connexion électrique de ces dernières. Aussi, les plaques de maintien comportent habituellement une face anodique au niveau de laquelle est formé un circuit de distribution du carburant, et une face cathodique, opposée à la face anodique, au niveau de laquelle est formé un circuit de distribution du comburant. Chaque circuit de distribution prend la forme d'un réseau de canaux agencés dans le plan de la plaque bipolaire pour amener le gaz réactif à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite lors de la réaction par la cellule.

Chaque plaque bipolaire peut être formée de deux tôles électriquement conductrices accolées l'une à l'autre. Elles présentent des reliefs formant les canaux de distribution destinés à approvisionner les électrodes en gaz réactifs. Un exemple de tels canaux de distribution est décrit notamment dans l'article de Li & Sabit, intitulé Review of bipolar plates in PEM fuel cells: Flow-field designs, Int. J. Hydrog. Energy 30 (2005) 359-371. D'autres technologies existent, comme par exemple les plaques bipolaires réalisées en matériau composite dont les reliefs formant les canaux de distribution sont réalisés par moulage. Comme le montre l'article de Li & Sabit 2005, les canaux de distribution peuvent s'étendre en regard des électrodes de différentes manières, par exemple en serpentin ou de manière rectiligne, voire de manière interdigitée. Ils sont latéralement séparés deux à deux par des nervures de séparation. Les canaux de distribution assurent donc l'approvisionnement en gaz réactif des électrodes de la zone active de l'assemblage membrane électrodes. Les nervures de séparation présentent une fonction électrique de transfert des électrons générés ainsi qu'une fonction thermique d'évacuation de la chaleur générée au sein de la cellule électrochimique.

Il peut être souhaitable de faire varier la largeur locale des canaux de distribution et/ou la largeur locale des nervures de séparation suivant l'axe longitudinal du réseau de distribution, dans le but d'optimiser les performances électrochimiques de la cellule électrochimique. A ce titre, la demande de brevet US2011/0159396 décrit différents exemples de plaques de maintien dont le réseau de distribution présente une variation longitudinale de la largeur locale des canaux de distribution et/ou des nervures de séparation.

Ainsi, la figure 1 illustre un exemple d'un réseau de distribution de forme générale rectangulaire dont le pas p suivant lequel les canaux de distribution sont agencés latéralement est constant. Dans la mesure où le pas p est égal à la somme de la largeur locale $l_c(x)$ des canaux de distribution et de la largeur locale $l_d(x)$ des nervures de séparation, définir le pas p et la variation longitudinale de l'une des largeurs locales revient à imposer la variation longitudinale de l'autre largeur locale. Ainsi, maintenir le pas p constant (forme générale rectangulaire du réseau de distribution) et définir une loi d'augmentation longitudinale de la largeur locale $l_c=f(x)$ des canaux de distribution se traduit *de facto* par dimensionner les nervures de séparation selon une loi de diminution longitudinale $l_d=g(x)$ telle que $l_d(x)=p-l_c(x)$, c'est-à-dire une loi d'évolution longitudinale g imposée par la loi d'évolution f de la largeur locale des canaux de distribution et par le pas p. Ces contraintes de dimensionnement du réseau de distribution peuvent alors induire une dégradation des performances de la cellule électrochimique.

Le document US2015/0180052A1 décrit un autre exemple d'un réseau de distribution ayant une forme générale sensiblement rectangulaire. Ici, les canaux de distribution présentent des ondulations latérales avec une période qui augmente suivant l'axe longitudinal du réseau de distribution. La largeur des canaux de distribution diminue suivant l'axe longitudinal, alors que la largeur des nervures de séparation reste sensiblement constante. Cependant, ce document ne décrit pas de procédé de fabrication d'un tel réseau de distribution.

## EXPOSÉ DE L'INVENTION

L'invention a pour objectif de remédier au moins en partie aux inconvénients de l'art antérieur, et plus particulièrement de proposer un procédé de fabrication d'une plaque de maintien comprenant un réseau de distribution dont le dimensionnement des canaux de distribution et des nervures de séparation permet d'améliorer les performances de la cellule électrochimique.

La plaque de maintien est une plaque d'une cellule électrochimique d'un réacteur électrochimique, destinée à être au contact d'un assemblage membrane électrode de la cellule électrochimique, comportant un réseau de distribution d'un fluide réactif jusqu'à une électrode de l'assemblage membrane électrodes, comportant des canaux de distribution s'étendant longitudinalement, sur au moins une partie du réseau de distribution, suivant un axe principal rectiligne $\Delta$ ; et présentant une largeur locale $l_c(x)$, et séparés latéralement deux à deux par une nervure de séparation de largeur locale $l_d(x)$, x étant une position suivant l'axe principal $\Delta$ suivant le sens d'écoulement du fluide réactif, le rapport $l_d(x)/l_c(x)$ entre la largeur locale $l_d(x)$ et la largeur locale $l_c(x)$ variant longitudinalement suivant l'axe principal $\Delta$.

Les canaux de distribution s'étendent longitudinalement suivant l'axe principal $\Delta$ de manière à former des ondulations latérales, dans un plan principal parallèle à l'assemblage membrane électrode, présentant une demi-période longitudinale d(x) variant longitudinalement suivant l'axe principal $\Delta$.

Certains aspects préférés mais non limitatifs de cette plaque de maintien sont les suivants.

Les canaux de distribution peuvent être agencés latéralement, suivant un axe orthogonal à l'axe principal $\Delta$, selon un pas p qui est constant suivant l'axe principal $\Delta$.

Les ondulations latérales peuvent s'étendre longitudinalement suivant l'axe principal $\Delta$ selon une ligne génératrice y(x) présentant une amplitude Ac suivant un axe orthogonal à l'axe principal $\Delta$, dont l'évolution longitudinale Ac(x) suivant l'axe principal $\Delta$ est constante ou varie entre une valeur initiale et une valeur finale différente de la valeur initiale.

Chaque ondulation latérale peut être formée d'une portion rectiligne inclinée vis-à-vis de l'axe principal $\Delta$, encadrée par deux portions courbes suivant l'axe principal $\Delta$.

Une demi-période $d(x_i)$ peut être définie entre une abscisse $x_{i-1}$ et une abscisse $x_i$ suivant l'axe principal $\Delta$. La portion rectiligne peut présenter une longueur $c_i$ et un angle d'inclinaison $\beta_i$ non nul par rapport à l'axe principal $\Delta$, et les portions courbes peuvent présenter une forme d'arc de cercle de rayon de courbure $R_i$ et d'angle d'étendue angulaire $\beta_i$, i étant le rang de la demi-période $d(x_i)$ compris entre 1 et N, et N étant le nombre de demi-périodes entre une abscisse initiale $x_0$ et une abscisse finale $x_N$ du réseau de distribution suivant l'axe principal $\Delta$.

Chaque ondulation latérale peut être formée uniquement d'au moins une portion courbe.

Chaque ondulation latérale peut être formée de deux portions courbes présentant une forme d'arc de cercle de rayon de courbure $R_i$ et d'angle d'étendue angulaire $\beta_i$, i étant le rang de la demi-période $d(x_i)$ compris entre 1 et N, N étant le nombre de demi-périodes entre une abscisse initiale $x_0$ et une abscisse finale $x_N$ du réseau de distribution suivant l'axe principal $\Delta$.

Chaque ondulation latérale peut être formée d'une portion courbe dont une ligne génératrice y(x), pour chaque demi-période $d(x_i)$, est fonction des valeurs $Ac(x_{i-1})$ et $Ac(x_i)$ de l'amplitude aux abscisses $x_{i-1}$ et $x_i$, les abscisses $\{x_i\}_{i=1,N}$ définissant les extrema successifs de la ligne génératrice y(x) suivant l'axe principal $\Delta$, et d'une fonction d'évolution v(t), où t est compris entre 0 pour l'abscisse $x_{i-1}$ et 1 pour l'abscisse $x_i$, et où la dérivée première de la fonction d'évolution v(t) en 0 et en 1 est nulle.

Les ondulations latérales peuvent s'étendre longitudinalement selon l'axe principal $\Delta$ suivant une ligne génératrice y(x) présentant une amplitude Ac selon un axe orthogonal à l'axe principal $\Delta$, la ligne génératrice y(x) présentant une dérivée nulle aux abscisses $\{x_i\}_{i=1,N}$.

Chaque ondulation latérale peut être formée uniquement d'une portion sensiblement rectiligne.

Chaque ondulation latérale peut être formée d'une portion strictement rectiligne présentant une longueur ci et un angle d'inclinaison $\beta_i$ par rapport à l'axe principal $\Delta$, i étant le rang de la demi-période d(xi) compris entre 1 et N, N étant le nombre de demi-périodes entre une abscisse initiale $x_0$ et une abscisse finale $x_N$ du réseau de distribution suivant l'axe principal $\Delta$.

Chaque ondulation latérale peut être formée d'une portion strictement rectiligne dont la ligne génératrice y(x), pour chaque demi-période $d(x_i)$, est fonction des valeurs $Ac(x_{i-1})$ et $Ac(x_i)$ de l'amplitude aux abscisses $x_{i-1}$ et $x_i$, les

abscisses $\{x_i\}_{i=1,N}$ définissant les extrema successifs de la ligne génératrice y(x) suivant l'axe principal Δ, et d'une fonction d'évolution v(t)=t, où t est compris entre 0 pour l'abscisse $x_{i-1}$ et 1 pour l'abscisse $x_i$.

Chaque ondulation latérale peut être formée d'une portion sensiblement rectiligne dont une ligne génératrice y(x), pour chaque demi-période $d(x_i)$, est fonction d'un angle d'inclinaison α(x) défini en l'abscisse x suivant l'axe principal Δ, comme étant égal, en valeur absolue, à l'arc-cosinus du rapport entre la somme lc(x) + ld(x) des largeurs locales lc(x) et ld(x) sur le pas p.

Les ondulations latérales peuvent s'étendre longitudinalement selon l'axe principal Δ suivant une ligne génératrice y(x) présentant une amplitude Ac selon un axe orthogonal à l'axe principal Δ, la dérivée de la ligne génératrice y(x) des ondulations latérales étant discontinue aux abscisses $\{x_i\}_{i=1,N}$, les abscisses $\{x_i\}_{i=1,N}$ définissant les extrema successifs de la ligne génératrice y(x) suivant l'axe principal Δ.

Chaque ondulation latérale peut être formée, soit d'une portion sensiblement rectiligne, l'angle d'inclinaison α(x) variant alors suivant l'axe principal Δ sur chaque demi-période $d(x_i)$ ; soit d'une portion strictement rectiligne, l'angle d'inclinaison α(x) étant alors constant suivant l'axe principal Δ sur chaque demi-période $d(x_i)$.

L'invention porte ainsi sur un procédé de fabrication d'une plaque de maintien selon l'une quelconque des caractéristiques précédentes, comportant les étapes suivantes :

◦ définition d'une longueur totale $L_{tot}$ et d'une largeur totale $l_{tot}$ d'au moins une partie du réseau de distribution dont les canaux de distribution comportent des ondulations latérales ;
◦ définition d'une évolution longitudinale suivant l'axe principal Δ des largeurs locales $l_c(x)$ et $l_d(x)$, x étant l'abscisse suivant l'axe principal Δ à partir d'une abscisse initiale $x_0$ ;
◦ détermination d'un pas p d'agencement latéral des canaux de distribution suivant un axe orthogonal à l'axe principal Δ, et d'une évolution longitudinale suivant l'axe principal Δ d'une amplitude d'une ligne génératrice passant par le centre de chaque canal de distribution, en fonction de la largeur totale $l_{tot}$ et des largeurs locales $l_c(x)$ et $l_d(x)$ ;
◦ détermination, de manière itérative, de i=1 à i=N, pour chaque demi-période $d(x_i)$ définie par les abscisses $x_{i-1}$ et $x_i$, $\{x_i\}_{i=1,N}$ étant les abscisses suivant l'axe principal Δ des extrema successifs des ondulations latérales, N étant le nombre de demi-périodes entre une abscisse initiale $x_0$ et une abscisse finale $x_N$ du réseau de distribution suivant l'axe principal Δ,

- de la valeur de l'abscisse $x_i$ de la demi-période $d(x_i)$ correspondante ;
- de la forme longitudinale de l'ondulation latérale correspondante ;

◦ fabrication de la plaque de maintien, dont le réseau de distribution comporte les canaux de distribution définis par les abscisses $\{x_i\}_{i=1,N}$ déterminées et par la forme longitudinale des ondulations latérales pour chaque demi-période $\{d(x_i)\}_{i=1,N}$ déterminées.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1, déjà décrite, est une vue de dessus, schématique, d'une plaque de maintien selon un exemple de l'art antérieur dans lequel la largeur locale $l_c(x)$ des canaux de distribution et celle $l_d(x)$ des nervures de séparation varient longitudinalement ;

la figure 2A est une vue en coupe transversale, schématique et partielle, d'une cellule électrochimique conventionnelle comportant deux plaques de maintien disposées de part et d'autre de l'assemblage membrane électrodes ; et la figure 2B est une vue en perspective d'une plaque de maintien illustrée sur la fig.2A ;

la figure 3A illustre des vues de dessus schématiques et partielles (vue générale et vues en détail) d'un réseau de distribution d'une plaque de maintien selon un mode de réalisation, dans laquelle les canaux de distribution présentent des ondulations latérales ; et la figure 3B est une vue schématique d'une ligne génératrice y(x) associée aux ondulations latérales d'un canal de distribution d'une plaque de maintien selon un autre mode de réalisation ;

la figure 4A est une vue de dessus, schématique, d'une partie d'un canal de distribution d'une plaque de maintien selon un premier mode de réalisation, dans lequel les canaux de distribution comportent des ondulations latérales formées de portions rectilignes et de portions courbes en arc de cercle ; la figure 4B est un organigramme illustrant les différentes étapes d'un premier procédé de fabrication d'une plaque de maintien selon un premier mode de réalisation ;

la figure 5A est une vue de dessus, schématique et partielle d'un exemple de réseau de distribution d'une plaque de maintien selon le premier mode de réalisation, obtenu par le premier procédé de fabrication ; et la figure 5B illustre notamment l'évolution longitudinale des largeurs locales $l_c(x)$ et $l_d(x)$ des canaux de distribution et des nervures de séparation, l'évolution longitudinale de la demi-période d(x), pour le réseau de distribution illustré sur la fig.5A ;

la figure 6A est une vue de dessus, schématique et partielle d'un exemple de réseau de distribution d'une plaque de maintien selon un deuxième mode de réalisation dans lequel les canaux de distribution comportent des ondulations latérales formées uniquement de portions courbes ; et la figure 6B illustre notamment l'évolution longitudinale des largeurs locales $l_c(x)$ et $l_d(x)$ des canaux de distribution et des nervures de séparation, l'évolution longitudinale de la demi-période d(x) pour le réseau de distribution illustré sur la fig.6A, obtenu par le premier procédé de fabrication ; la figure 6C est un organigramme illustrant les différentes étapes d'un deuxième procédé de fabrication d'une plaque de maintien selon un deuxième mode de réalisation ;

la figure 7A est une vue de dessus, schématique et partielle d'un exemple de réseau de distribution d'une plaque de maintien selon un troisième mode de réalisation, dans lequel les canaux de distribution comportent des ondulations latérales en dents de scie formées uniquement de portions strictement rectilignes ; et la figure 7B illustre notamment l'évolution longitudinale des largeurs locales $l_c(x)$ et $l_d(x)$ des canaux de distribution et des nervures de séparation, l'évolution longitudinale de la demi-période d(x) pour le réseau de distribution illustré sur la fig.7A, obtenu par un troisième procédé de fabrication ;

la figure 8A est une vue de dessus, schématique et partielle d'un exemple de réseau de distribution d'une plaque de maintien selon un quatrième mode de réalisation, dans lequel les canaux de distribution comportent des ondulations latérales en dents de scie formées uniquement de portions sensiblement rectilignes légèrement courbes ; et la figure 8B illustre notamment l'évolution longitudinale des largeurs locales $l_c(x)$ et $l_d(x)$ des canaux de distribution et des nervures de séparation, l'évolution longitudinale de la demi-période d(x) pour le réseau de distribution illustré sur la fig.8A, obtenu par un quatrième procédé de fabrication.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près.

L'invention porte sur le procédé de fabrication d'une plaque de maintien d'une cellule électrochimique. La plaque de maintien est destinée à être au contact d'au moins un assemblage membrane électrodes d'une cellule électrochimique d'un réacteur électrochimique du type pile à combustible ou d'un électrolyseur.

On décrira différents modes de réalisation et variantes en référence à une pile à combustible, et en particulier à une pile à hydrogène de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C, ainsi qu'aux électrolyseurs électrochimiques basse température, par exemple les électrolyseurs générant de l'hydrogène et de l'oxygène à partir d'eau.

La plaque de maintien comporte un réseau de distribution dont les canaux de distribution s'étendent entre l'entrée et la sortie du réseau suivant un axe principal $\Delta$, en présentant des ondulations latérales, dans le plan principal de la plaque de maintien, avec une période longitudinale $\Lambda(x)$, et de préférence une demi-période longitudinale d(x), qui varient longitudinalement. Par ondulation latérale, on entend que le canal de distribution présente localement un décalage transversal, dans le plan XY de la plaque de maintien, par rapport à l'axe principal $\Delta$ suivant lequel le canal de distribution s'étend.

La figure 2A est une vue partielle et schématique, en coupe transversale, d'un exemple de cellule électrochimique 1 d'une pile à combustible de type PEM selon un exemple de l'art antérieur. La figure 2B est une vue partielle et schématique, en perspective, d'une plaque de maintien illustrée sur la fig.2A réalisée ici selon la technologie des tôles conductrices embouties. Dans cet exemple, les canaux de distribution et les nervures de séparation présentent une largeur constante et s'étendent de manière rectiligne.

On définit ici et pour la suite de la description un repère orthonormé direct (X, Y, Z), où le plan XY s'étend de manière parallèle au plan de la cellule électrochimique 1, et où l'axe Z est orienté suivant la dimension d'épaisseur des plaques de maintien 10.

Les cellules électrochimiques appartiennent ici à un empilement (non représenté) de cellules d'une pile à combustible. Chaque cellule électrochimique 1 comporte un assemblage 2 membrane/électrodes formé d'une anode 3 et d'une cathode 4 séparées l'une de l'autre par un électrolyte comprenant ici une membrane polymère 5. Les assemblages 2 membrane/électrodes des cellules électrochimiques sont disposés entre des plaques de maintien 10, appelées ici plaques bipolaires, adaptées à amener des gaz réactifs aux électrodes 3, 4 et à évacuer la chaleur produite lors de la réaction électrochimique.

De manière connue en soi, chaque électrode 3, 4 comporte une couche de diffusion 6 (GDL, pour *Gas Diffusion Layer,* en anglais), disposée au contact d'une plaque bipolaire 10, et une couche active 7 située entre la membrane électrolytique 5 et la couche de diffusion 6. Les couches actives 7 sont le lieu des réactions électrochimiques. Elles comportent des matériaux permettant les réactions d'oxydation et de réduction aux interfaces respectives de l'anode 3 et la cathode 4 avec la membrane électrolytique 5. Plus précisément, elles peuvent comporter un catalyseur, par exemple des particules de platine, disposé sur un support électriquement conducteur, par exemple une matrice carbonée, et un ionomère assurant la conductivité protonique, par exemple du Nafion. Les couches de diffusion 6 sont réalisées en matériau poreux autorisant la diffusion des gaz réactifs à partir de canaux de distribution 13 des plaques bipolaires 10 jusqu'aux couches actives 7, ainsi que la diffusion des produits issus de la réaction électrochimique jusqu'aux mêmes canaux de distribution 13.

Chaque plaque bipolaire 10 est formée de deux tôles conductrices 11 accolées et assemblées l'une à l'autre, ces tôles conductrices 11 étant embouties de manière à former des réseaux de distribution de gaz réactifs au niveau des électrodes 3, 4 de chacune des cellules électrochimiques, et un réseau de refroidissement 12 situé entre les tôles conductrices 11. Ainsi, une première tôle conductrice 11, dite anodique, est destinée à être au contact de l'anode 3 d'un assemblage 2 membrane/électrodes d'une cellule électrochimique 1, alors que la deuxième tôle conductrice 11, dite cathodique, est destinée à être au contact de la cathode 4 d'un assemblage 2 membrane/électrodes d'une cellule électrochimique 1 adjacente.

Chaque tôle conductrice 11 comporte une face externe et une face interne opposée, les tôles conductrices 11 étant accolées l'une à l'autre au niveau des faces internes. Une face externe est dite anodique lorsqu'elle est destinée à être au contact de l'anode 3 d'une cellule électrochimique 1, ou cathodique lorsqu'elle est destinée à être au contact de la cathode 4 de la cellule électrochimique 1 adjacente. La face anodique d'une tôle conductrice 11 comporte le réseau de distribution d'un gaz réactif, par exemple de l'hydrogène, et la face cathodique de l'autre tôle conductrice 11 comporte un réseau de distribution d'un autre gaz réactif, par exemple de l'air ou de l'oxygène.

Les tôles conductrices 11 se présentent sous forme de feuilles, ou de plaques élémentaires de faible épaisseur, réalisées en un matériau électriquement conducteur, par exemple un métal voire un matériau composite par exemple chargé en graphite. L'épaisseur peut être de l'ordre de quelques dizaines de microns à quelques centaines de microns dans le cas des tôles métalliques, par exemple de $50\mu m$ à $200\mu m$ environ.

Chaque tôle conductrice 11 comporte des reliefs obtenus par exemple par emboutissage ou mis en forme sous presse, dont la forme sur une face est le complémentaire de la forme sur la face opposée. Ces reliefs forment, au niveau des faces externes, les réseaux de distribution 14 de gaz réactifs, et, au niveau des faces internes, un réseau de refroidissement 12 comportant des canaux dans lesquels un fluide caloporteur est destiné à s'écouler.

Chaque canal de distribution 13 est délimité par des parois latérales qui s'étendent sensiblement suivant l'axe Z de l'épaisseur de la plaque bipolaire 10, les parois latérales de chaque canal 13 étant reliées entre elles par une paroi de fond 15. Chaque canal de distribution 13 est séparé des canaux adjacents du même réseau de distribution par une paroi dite nervure de séparation 17 qui relie les parois latérales adjacentes de deux canaux de distribution 13 adjacents, cette nervure de séparation 17 étant destinée à venir au contact de l'électrode correspondante. Ainsi, les canaux de distribution 13 anodiques, resp. cathodiques, sont séparés deux à deux par une nervure de séparation 17 anodique, resp. cathodique. La nervure de séparation 17 est une paroi dont la surface longitudinale 18 est de préférence au moins en partie sensiblement plane.

Les plaques bipolaires illustrées sur les fig.2A et 2B sont du type tôles conductrices 11 embouties. D'autres technologies de plaque bipolaire 10 peuvent être utilisées, par exemple les plaques réalisées en matériau composite chargé par exemple de graphite, dont les reliefs sont réalisés par moulage.

La figure 3A illustre, en vue de dessus, un exemple d'un réseau de distribution d'une plaque de maintien selon un mode de réalisation, dont les canaux de distribution comportent des ondulations latérales. Dans cet exemple, les ondulations latérales présentent une configuration en dents de scie avec des portions sensiblement rectilignes, mais, comme explicité plus loin, d'autres configurations sont possibles.

La figure 3B illustre, en vue de dessus, une partie d'une ligne génératrice y(x) associée aux ondulations latérales des canaux de distribution, ici selon une autre configuration dans laquelle les ondulations latérales comportent, sur une demi-période d, une portion rectiligne encadrée par deux portions courbes.

D'une manière générale, sur tout ou partie du réseau de distribution, les canaux de distribution s'étendent longitudinalement suivant un axe principal Δ rectiligne, ici parallèle à l'axe X, et comportent des ondulations latérales, dans un plan XY parallèle au plan de l'assemblage membrane/électrodes, présentant une demi-période longitudinale d qui varie suivant l'axe principal Δ. Ils s'étendent longitudinalement de manière parallèle les uns aux autres, et sont distribués latéralement suivant un axe orthogonal à l'axe principal Δ, ici suivant l'axe Y, de manière périodique au pas p constant. Aussi, le réseau de distribution présente au moins une partie de forme générale rectangulaire de longueur totale $L_{tot}$ et de largeur totale $l_{tot}$, qui s'étend entre une abscisse initiale $x_0$ de référence ($x_0$=0) et une abscisse finale $x_N$ ($x_{N=}L_{tot}$). Chaque canal de distribution s'étend longitudinalement suivant une ligne génératrice y(x) qui passe par le centre du canal (trait en pointillé sur la fig.3B).

Les canaux de distribution s'étendent longitudinalement de manière à former des ondulations latérales présentant une demi-période d(x) qui varie longitudinalement suivant l'axe principal Δ. Les ondulations latérales des canaux de distribution sont définies comme étant des décalages transversaux dans le plan XY, vis-à-vis de l'axe principal Δ. Les ondulations latérales sont caractérisées par une amplitude $A_c$ et une demi-période d.

L'amplitude $A_c$ est définie comme la distance suivant un axe orthogonal à l'axe principal Δ, ici l'axe Y, entre deux extrema consécutifs de la ligne génératrice y(x). Elle peut être constante ou peut varier longitudinalement suivant l'axe principal Δ, tout en restant de préférence bornée dans une gamme prédéfinie.

La demi-période d est définie comme la distance suivant l'axe principal Δ entre deux extrema consécutifs de la ligne génératrice y(x). La demi-période d(x) varie longitudinalement suivant l'axe principal Δ entre une première valeur $d_1$ en l'abscisse $x_1$ du premier extremum consécutif à l'abscisse $x_0$, et une deuxième valeur $d_N$ en l'abscisse $x_N$, différente de la première valeur $d_1$, et par exemple inférieure à celle-ci. La demi-période d(x) varie longitudinalement de manière discontinue, intervalle par intervalle Ii. Elle est alors constante sur un intervalle Ii considéré. Comme décrit en détail plus loin, un intervalle $I_i$ de rang i est défini comme étant la zone d'un canal de distribution comportant une ondulation latérale d'une demi-période $d(x_i)$, entre les abscisses $x_{i-1}$ et $x_i$ suivant l'axe principal Δ.

Dans la suite de la description, et en référence à la fig.4A qui illustre une ondulation latérale selon une configuration similaire à celle de la fig.3B, on note $D_c(x)$ la direction locale, à la position x suivant l'axe principal Δ, suivant laquelle un canal de distribution est incliné localement par rapport à l'axe principal Δ. La direction locale $D_c(x)$ est ainsi tangente, en l'abscisse x, à la ligne génératrice associée au canal de distribution considéré. On définit de manière similaire la direction locale $D_d(x)$ associée aux nervures de séparation.

La position x est définie comme étant l'abscisse du point considéré à partir de l'abscisse initiale $x_0$ du réseau de distribution suivant l'axe principal Δ. Par ailleurs, on définit $\{x_i\}_{i=1,N}$ l'ensemble des positions des extrema successifs des ondulations latérales suivant l'axe principal Δ.

La largeur locale $l_c$ des canaux de distribution est définie comme étant la dimension transversale des canaux dans le plan XY, suivant un axe orthogonal à la direction locale $D_c(x)$, et non pas suivant un axe orthogonal à l'axe principal Δ. Elle est définie, de préférence, au niveau du plan de contact avec l'assemblage membrane électrodes. La largeur locale $l_d$ des nervures de séparation est définie de la même manière suivant un axe orthogonal à la direction locale $D_d(x)$.

D'une manière générale, la largeur locale $l_c(x)$ des canaux de distribution et/ou la largeur locale $l_d(x)$ des nervures de séparation varient longitudinalement suivant l'axe principal Δ, de sorte que le rapport $l_d(x)/l_c(x)$ entre la largeur locale $l_d(x)$ et la largeur locale $l_c(x)$ varie le long de l'axe principal Δ. Les canaux de distribution présentent de préférence chacun la même loi d'évolution longitudinale de la largeur locale $l_c(x)$. De même, les nervures de séparation présentent de préférence chacun la même loi d'évolution longitudinale de la largeur locale $l_d(x)$.

Il apparaît que, lorsque le rapport $l_d(x)/l_c(x)$ varie longitudinalement suivant l'axe principal Δ, le fait de réaliser des canaux de distribution qui présentent des ondulations latérales avec une demi-période d(x) qui varie longitudinalement suivant l'axe principal Δ permet de décorréler l'évolution longitudinale de la largeur locale $l_d(x)$ de celle de la largeur locale $l_c(x)$, pour une forme générale rectangulaire du réseau de distribution (ou d'une partie du réseau de distribution), et donc pour un pas p du réseau donné. Il est alors possible, à la différence de l'art antérieur mentionné précédemment, de réaliser une plaque de maintien dont les évolutions longitudinales des largeurs locales $l_d(x)$ et $l_c(x)$ sont prédéfinies indépendamment l'une de l'autre, de manière à améliorer les performances de la cellule électrochimique.

La fabrication d'une telle plaque de maintien avec les évolutions longitudinales souhaitées des largeurs locales $l_c(x)$ et $l_d(x)$ est particulièrement complexe. Il est bien entendu possible de dimensionner le réseau de distribution de manière plus ou moins grossière, comme le document US2015/0180052A1 semble le décrire. Cependant, la largeur des canaux de distribution et celle des nervures de séparation s'écarteront alors des évolutions longitudinales $l_c(x)$ et $l_d(x)$ souhaitées, ce qui ne permet pas d'obtenir l'optimisation voulue des performances de la cellule électrochimique, et/ou le réseau de distribution (ou la partie du réseau) présentera une forme générale non rectangulaire.

Or, il apparaît que le procédé de fabrication selon l'invention, par le fait que le réseau de distribution est réalisé de manière itérative, c'est-à-dire demi-période par demi-période, avec une demi-période qui varie suivant l'axe principal Δ, permet alors d'obtenir des canaux de distribution et des nervures de séparation dont les largeurs respectives présentent effectivement les évolutions longitudinales $l_c(x)$ et $l_d(x)$ souhaitées, sur au moins une partie de forme générale rectangulaire du réseau de distribution. On obtient ainsi une plaque de maintien et donc une cellule électrochimique avec l'optimisation voulue des performances.

La figure 3B illustre un exemple de ligne génératrice y(x) associée aux ondulations latérales d'un canal de distribution. Dans cet exemple, chaque ondulation latérale, sur un intervalle Ii correspondant à une demi-période $d(x_i)$, est formée d'une portion rectiligne encadrée par deux portions courbes en arc de cercle, comme illustré sur la fig.4A. Comme décrit plus loin, d'autres configurations sont possibles.

La position $x_{i-1}$, $x_i$, $x_{i+1}$ des extrema successifs de la ligne génératrice y(x) définissent la demi-période $d(x_i) = x_i - x_{i-1}$ qui varie longitudinalement suivant l'axe principal Δ. On note ainsi Ii l'intervalle correspondant à la demi-période d(xi) de rang i, s'étendant entre l'abscisse $x_{i-1}$ et l'abscisse $x_i$. Ainsi, l'intervalle $I_1$ est le 1er intervalle allant de $x_0$ à $x_1$, et de demi-période $d_1$. D'une manière générale, la demi-période d(x) est constante dans chaque intervalle $\{I_i\}_{i=1,N}$ et, dans cet exemple, diminue suivant l'axe principal Δ.

D'une manière générale, les ondulations latérales des canaux de distribution peuvent présenter plusieurs configurations selon qu'elles comportent des portions rectilignes et/ou des portions courbes :

1. Configuration A : les ondulations latérales sont formées de portions rectilignes et de portions courbes, ces dernières étant par exemple en arc de cercle. Il s'agit alors d'une plaque de maintien selon un premier mode de réalisation.
2. Configuration B : les ondulations latérales comportent uniquement des portions courbes, par exemple en arc de cercle ou de type sinusoïde voire polynomial, entre autres. Il s'agit alors d'une plaque de maintien selon un deuxième mode de réalisation.
3. Configuration C : les ondulations latérales sont en dents de scie et comportent uniquement des portions ici strictement rectilignes. Il s'agit alors d'une plaque de maintien selon un troisième mode de réalisation.
4. Configuration D : les ondulations latérales sont en dents de scie et comportent uniquement des portions sensiblement rectilignes et légèrement courbées. Il s'agit alors d'une plaque de maintien selon un quatrième mode de réalisation.

Il en ressort que les configurations A et B ont en commun de comporter des portions courbes dimensionnées de sorte que la ligne génératrice y(x) des ondulations latérales présente une dérivée nulle aux positions $\{x_i\}_{i=1,N}$ des extrema successifs des ondulations latérales suivant l'axe principal Δ. Les configurations C et D ont en commun de présenter une forme de dents de scie, traduisant le fait que la ligne génératrice y(x) présente une dérivée discontinue aux positions $\{x_i\}_{i=1,N}$.

Dans la suite de la description, chaque configuration des canaux de distribution est décrite en détail, accompagnée d'un ou plusieurs exemples de procédé de fabrication d'une plaque de maintien correspondante.

La figure 4A illustre, de manière schématique et partielle, et en vue de dessus, un réseau de distribution d'une plaque de maintien selon un premier mode de réalisation. La partie illustrée correspond ici à une demi-période d'une ondulation latérale selon une configuration A, dans laquelle l'ondulation latérale comporte des portions rectilignes ainsi que des portions courbes, ici en arc de cercle. La présence de portions courbées positionnées aux extrema des ondulations latérales permet de faciliter la fabrication de la plaque de maintien.

Dans cette configuration, une ondulation latérale de l'intervalle Ii comporte, sur une demi-période $d(x_i)$, une portion rectiligne de longueur $c_i$ et inclinée d'un angle d'inclinaison $\beta_i$ vis-à-vis de l'axe principal Δ, encadrée par deux portions courbes, ici en arc de cercle, définies chacune par un rayon de courbure Ri et un angle d'étendue angulaire $\beta_i$. La ligne génératrice y(x) présente une dérivée continue, de valeur nulle, aux positions $\{x_i\}_{i=1,N}$.

Autrement dit, à partir de l'extremum à l'abscisse $x_{i-1}$, on trouve une première portion courbe en arc de cercle, définie par le rayon de courbure Ri et par l'angle d'étendue angulaire $\beta_i$. A partir de cette première portion courbe, s'étend la portion rectiligne qui présente une longueur $c_i$ suivant la direction locale $D_c(x)$ et est inclinée vis-à-vis de l'axe principal Δ d'un angle d'inclinaison $\beta_i$ identique à l'angle $\beta_i$ d'étendue angulaire. Enfin, la portion rectiligne est suivie d'une deuxième portion courbe, identique à la première portion courbe, définie également par le même rayon de courbure Ri et par le même angle d'étendue angulaire $\beta_i$. Ainsi, aux abscisses $x_{i-1}$ et $x_i$, la ligne génératrice y(x) est tangente à l'axe principal Δ.

Les largeurs locales $l_c(x)$, $l_d(x)$ peuvent varier entre $x_{i-1}$ et $x_i$ suivant l'axe principal Δ, et l'une ou l'autre, par exemple la largeur locale $l_d(x)$, peut présenter une valeur minimale entre $x_{i-1}$ et $x_i$. Quoi qu'il en soit, la largeur locale moyenne notée $\overline{l_c}(x)$ et/ou $\overline{l_d}(x)$ varie longitudinalement suivant l'axe principal Δ.

D'une manière générale, pour les différentes configurations mentionnées précédemment, on peut noter $S_c(x_i)$ l'aire occupée par un canal sur l'intervalle Ii entre les abscisses $x_{i-1}$ et $x_i$ suivant l'axe principal Δ. On note également $S_T(x_i)$ l'aire occupée par le canal et une nervure adjacente sur l'intervalle Ii. On peut écrire, en notant $L_c$ la longueur d'un canal sur l'intervalle Ii :

$$S_c(x_i) = \int_{x_{i-1}}^{x_i} l_c(x) \times \frac{dL_c(x)}{dx} dx$$

$$S_T(x_i) = p \times (x_i - x_{i-1})$$

Ensuite, il apparaît que, sur l'intervalle Ii, le ratio de la largeur locale moyenne $\overline{l_c}(x_i)$ du canal sur la somme des largeurs locales moyennes $\overline{l_c}(x_i)$ et $\overline{l_d}(x_i)$ est égal au ratio de l'aire $S_c(x_i)$ sur l'aire $S_T(x_i)$ :

$$\frac{\overline{l_c}(x_i)}{\overline{l_c}(x_i) + \overline{l_d}(x_i)} = \frac{S_c(x_i)}{S_T(x_i)} \qquad (1)$$

L'équation précédente donnant $S_c(x_i)$ peut être simplifiée par l'approximation suivante, utilisant la largeur locale moyenne de canal $\overline{l_c}(x_i)$ :

$$S_c(x_i) = \overline{l_c}(x_i) \int_{x_{i-1}}^{x_i} \frac{dL_c(x)}{dx} dx$$

On remarque que, dans le cadre de la configuration A des ondulations latérales, la longueur $L_c(x_i)$ sur l'intervalle Ii d'un canal de distribution s'exprime par la relation suivante :

$$L_c(x_i) = \int_{x_{i-1}}^{x_i} \frac{dL_c(x)}{dx} dx = 2\beta_i R_i + c_i$$

Aussi, l'équation (1) peut s'écrire, en choisissant par exemple les largeurs locales moyennes $\overline{l_c}(x_i)$ et $\overline{l_d}(x_i)$ comme étant égales à la valeur de la largeur locale à l'abscisse $x_{i-1}$ :

$$\frac{1}{l_c(x_{i-1}) + l_d(x_{i-1})} - \frac{2\beta_i R_i + c_i}{p \times (x_i - x_{i-1})} = 0 \qquad (1.1)$$

Comme détaillé par la suite, à partir notamment de cette équation (1.1) et en imposant la valeur de l'un des paramètres $\beta_i$, $R_i$ et $c_i$, il est possible de déterminer de manière itérative, intervalle par intervalle, la position de l'abscisse $x_i$ et de déterminer la forme longitudinale des canaux de distribution selon la configuration A, et ainsi de fabriquer la plaque de maintien correspondante.

La plaque de maintien selon le premier mode de réalisation peut être réalisée par un premier procédé de fabrication, qui repose sur une formulation géométrique et sur une construction itérative, intervalle par intervalle, des ondulations latérales successives des canaux de distribution.

La figure 4B est un organigramme d'un tel premier procédé de fabrication d'une plaque de maintien selon un premier mode de réalisation. Les ondulations latérales sont donc du type de la configuration A, tel qu'illustré sur la fig.4A.

Lors d'une étape 100, on définit tout d'abord les dimensions générales de la partie ou de la totalité du réseau de distribution qui contient des ondulations latérales. Dans cet exemple, il s'agit de la totalité du réseau de distribution dont les canaux de distribution comportent des ondulations latérales. Il est alors rectangulaire. On définit ainsi la valeur de la longueur totale $L_{tot}$ et celle de la largeur totale $l_{tot}$ suivant l'axe principal Δ. La longueur totale $L_{tot}$ peut être supérieure à $l_{tot}$, voire être égale ou inférieure à celle-ci.

Lors d'une étape 200, on définit l'évolution longitudinale de la largeur locale $l_c(x)$ des canaux de distribution et celle de la largeur locale $l_d(x)$ des nervures de séparation. Les évolutions longitudinales des largeurs locales $l_c$ et $l_d$ peuvent être issues d'une évaluation des performances de la cellule électrochimique à partir d'essais expérimentaux ou de simulations numériques. Ainsi, des essais expérimentaux peuvent être effectués pour différentes plaques de maintien qui diffèrent entre elles par les évolutions longitudinales des largeurs locales $l_c(x)$ et $l_d(x)$.

Alternativement, des simulations numériques peuvent être effectuées à partir d'un modèle numérique d'une cellule électrochimique, comme par exemple celui décrit dans la publication de Robin et al. intitulée Development and experimental validation of a PEM fuel cell 2D-model to study heterogeneities effects along large-area cell surface, Int. J. Hydrogen Energy, 40 (2015) 10211-10230, ou celle de B. Randrianarizafy et al. intitulée Design optimization of rib/channel patterns in a PEMFC through performance heterogeneities modeling, International Journal of Hydrogen Energy, Volume 43, Issue 18, 3 May 2018, p.8907-8926.

Les performances de cellules électrochimiques, qui diffèrent entre elles par les évolutions longitudinales des largeurs locales $l_c(x)$ et $l_d(x)$, peuvent être évaluées à partir de la courbe de polarisation correspondante, indiquant l'évolution de la tension de polarisation en fonction de la densité de courant électrique. En effet, une telle courbe de polarisation est fonction des caractéristiques structurelles de la cellule électrochimique (largeur locale des canaux et des nervures...) et des conditions opératoires.

Ainsi, à titre d'exemple, il apparaît qu'une première plaque de maintien à canaux de distribution d'une largeur locale $l_c(x)$ constante égale à 1mm et à nervures de séparation d'une largeur locale $l_d(x)$ constante égale à 0,4mm présente des performances électrochimiques en condition humide supérieures à celles d'une deuxième plaque de maintien qui diffère de la première plaque par la largeur locale $l_d(x)$ constante et égale à 0,8mm. Cette deuxième plaque de maintien présente, en revanche, des performances électrochimiques en condition sèche supérieures à celles de la première plaque. Aussi, on peut définir l'évolution longitudinale de la largeur locale $l_c(x)$ comme étant constante, et définir celle de la largeur locale $l_d(x)$ comme diminuant de manière linéaire de 0,8mm à l'entrée du réseau de distribution (généralement en conditions sèches) à 0,4mm à la sortie (généralement en conditions humides) du fait de l'apport d'eau produite par la réaction.

Lors d'une étape 300, on détermine ensuite le pas p d'agencement latéral des canaux de distribution, ainsi que l'évolution longitudinale de l'amplitude $A_c(x)$ suivant l'axe principal $\Delta$.

Le pas p est choisi à partir des valeurs des largeurs locales $l_c(x)$ et $l_d(x)$, et reste constant suivant l'axe principal $\Delta$. Il est choisi notamment en fonction de critères géométriques, en particulier en fonction de la largeur totale $l_{tot}$, tout en respectant la relation : $p \geq \max(l_c(x)+l_d(x))$ pour x allant de $x_0$ à $x_N$. On obtient ainsi le nombre $n_c$ de canaux de distribution que peut contenir le réseau de distribution suivant la largeur totale $l_{tot}$.

L'évolution longitudinale de l'amplitude $A_c(x)$ est choisie également en fonction de critères géométriques, en particulier en fonction de la largeur totale $l_{tot}$. Le pas p, le nombre de canaux nc, et l'amplitude $A_c$ sont notamment choisis de manière à vérifier la relation $l_{tot} = n_c \times p + 2 \times \max(A_c(x))$. Notons que sur la fig.3A, la surface active de la cellule électrochimique est délimitée par un rectangle en traits pointillés de largeur $n_c \times p$. Le réseau de distribution 14 comporte ici une largeur $l_{tot}$ telle que les canaux d'extrémité, situés en bordure de la largeur, s'étendent latéralement légèrement en-dehors du rectangle de la surface active. Il est bien entendu possible de dimensionner le réseau de distribution en largeur, de sorte qu'il reste entièrement contenu à l'intérieur du rectangle de la surface active.

Lors d'une étape 400, on détermine l'ensemble des abscisses $\{x_i\}_{i=1,N}$ correspondant aux positions des extrema successifs de la ligne génératrice d'un canal de distribution. On obtient alors les intervalles $\{I_i\}_{i=1,N}$ et donc l'évolution longitudinale de la demi-période d(x). On détermine également les paramètres géométriques $\{c_i, R_i, \beta_i\}_{i=1,N}$ des ondulations latérales pour les intervalles $\{I_i\}_{i=1,N}$.

Pour cela, on remarque que les ondulations latérales selon la configuration A peuvent être décrites, pour un intervalle Ii, par le système d'équations (2) suivant, dans lequel on retrouve l'équation (1.1) introduite précédemment :

$$\begin{cases} \dfrac{1}{l_c(x_{i-1}) + l_d(x_{i-1})} - \dfrac{2\beta_i R_i + c_i}{p \times (x_i - x_{i-1})} = 0 \\ A_{c,i} = 2R_i(1 - \cos\beta_i) + c_i \sin\beta_i \\ d_i = x_i - x_{i-1} = 2R_i \sin\beta_i + c_i \cos\beta_i \end{cases} \qquad (2)$$

Ce système d'équations (2) comporte ainsi trois équations et quatre inconnues, à savoir l'abscisse $x_i$ et les paramètres géométriques $R_i$, $c_i$, $\beta_i$ qui définissent la forme de l'ondulation latérale du canal de distribution.

Aussi, le fait de définir la valeur de l'un de ces paramètres permet de résoudre ce système d'équations. On obtient alors à la fois la valeur de l'abscisse $x_i$ qui définit l'intervalle $I_i$ et donc la valeur de la demi-période $d_i$, mais également les paramètres de l'ondulation latérale.

Le choix de la valeur du rayon de courbe Ri des portions courbes permet de maîtriser le rayon de courbure des canaux de distribution, et donc de contrôler la perte de charge locale. Le choix de la longueur $c_i$ permet de maîtriser la portion rectiligne de chaque intervalle, notamment dans le cas où des soudures devraient être réalisées en fond de canal. Le choix de l'angle $\beta_i$ permet de maîtriser l'angle d'inclinaison de chaque portion rectiligne vis-à-vis de l'axe principal $\Delta$, pour notamment respecter une contrainte liée à l'appui sur une demi-plaque bipolaire adjacente. Il est également possible de faire un choix hybride, notamment pour obtenir une valeur de Ri optimale si la valeur de $c_i$ est supérieure à une valeur minimale donnée, et de laisser varier la valeur de $R_i$ lorsque la valeur de $c_i$ obtenue avec une valeur de $R_i$ optimale est trop faible.

A titre d'exemple, on peut choisir d'imposer l'évolution longitudinale de R(x), c(x) ou de $\beta(x)$ lors de l'étape 200 ou 300, et d'imposer, par exemple : $R_i = R(x_{i-1})$ ; $c_i = c(x_{i-1})$ ; et/ou $\beta_i = \beta(x_{i-1})$.

L'étape 400 est effectuée pour le premier intervalle $I_1$, permettant ainsi d'obtenir l'abscisse $x_1$ du premier extremum de l'ondulation latérale ainsi que les paramètres géométriques $\{c_1, R_1, \beta_1\}$ qui la définissent. Cette étape 400 est réitérée de manière successive, intervalle par intervalle, en incrémentant le rang i à chaque fois jusqu'à i=N. Ainsi, on obtient les abscisses $\{x_i\}_{i=1,N}$ et les paramètres géométriques des ondulations latérales successives $\{c_i, R_i, \beta_i\}_{i=1,N}$ pour les intervalles $\{I_i\}_{i=1,N}$. A chaque incrémentation du rang i, l'ondulation latérale change de direction suivant l'axe Y, en respectant une fonction s(x) de changement de direction de la ligne génératrice des ondulations latérales, qui alterne entre les valeurs +1 et -1 d'un intervalle à l'autre : $s(x_i) = -s(x_{i-1})$.

Lors d'une étape 500, on réalise ensuite la plaque de maintien comportant le réseau de distribution de longueur $L_{tot}$ et de largeur $l_{tot}$, à partir des paramètres définis $l_c(x)$, $l_d(x)$, p et $A_c(x)$, et à partir des paramètres géométriques déterminés $\{c_i, R_i, \beta_i\}_{i=1,N}$ pour les intervalles $\{I_i\}_{i=1,N}$ de la ligne génératrice des canaux de distribution. Les canaux de distribution et les nervures de séparation présentent donc des ondulations latérales formées ici chacune d'une portion rectiligne encadrée par des portions courbes en arc de cercle (configuration A).

La figure 5A illustre un exemple de réseau de distribution obtenu par le premier procédé de fabrication décrit en référence à la fig. 4B, et la figure 5B illustre, d'une part, l'évolution longitudinale correspondante des largeurs locales définies $l_c(x)$ et $l_d(x)$, ainsi que celle du pas p et de l'amplitude $A_c(x)$, et d'autre part, l'évolution longitudinale de la demi-période d(x).

Dans cet exemple, le réseau de distribution est de forme générale rectangulaire dans le plan XY, et présente une longueur totale $L_{tot}$ de 100mm et une largeur totale $l_{tot}$ de 54mm. Les canaux de distribution présentent des ondulations latérales selon la configuration A, c'est-à-dire qu'elles comportent chacune une portion rectiligne de longueur $c_i$ inclinée d'un angle $\beta_i$ vis-à-vis de l'axe principal $\Delta$, encadrée par deux portions courbes en arc de cercle de rayon de courbure Ri et d'angle d'étendue angulaire $\beta_i$. Les paramètres géométriques $\{c_i, R_i, \beta_i\}_{i=1,N}$ sont constantes par intervalles $\{I_i\}_{i=1,N}$ et varient de manière discontinue intervalle par intervalle, tout comme la demi-période d(x).

L'évolution longitudinale de la largeur locale $l_c(x)$ des canaux de distribution est définie comme étant constante et égale à 0.8mm. L'évolution longitudinale de la largeur locale $l_d(x)$ des nervures de séparation est définie comme variant continûment de 1.8mm à l'entrée à 0.5mm en sortie.

Le pas p d'agencement latéral des canaux de distribution est défini comme étant égal à 2.7mm. On définit également l'évolution longitudinale de l'amplitude $A_c(x)$ comme variant continûment de 2.6mm à 4.6mm. On définit ici également l'évolution longitudinale du rayon de courbure R(x), comme étant constante et égale à 0.6mm.

On détermine ensuite les intervalles $\{I_i\}_{i=1,N}$ et les valeurs des paramètres géométriques $\{c_i, \beta_i\}_{i=1,N}$ (R(x) étant prédéfini), en commençant tout d'abord par le premier intervalle $I_1$ en résolvant le système d'équations (2) défini précédemment, puis en réitérant cette étape en incrémentant d'une unité le rang i de l'intervalle considéré jusqu'à i=N.

La fig.5A illustre le réseau de distribution ainsi obtenu. Les zones claires correspondent aux canaux de distribution et les zones sombres aux nervures de séparation. Les traits en pointillé définissent les limites générales du réseau de distribution de dimensions $L_{tot}$ et $l_{tot}$. Les canaux de distribution présentent alors des ondulations latérales selon la configuration A.

Comme l'illustre la fig.5B, le rapport $l_d(x)/l_c(x)$ varie ainsi de 2.25 en entrée du réseau de distribution à 0.625 en sortie du réseau, alors que le pas p reste constant. La demi-période d(x) diminue progressivement, entre les abscisses $x_0$ et $x_N$ du réseau, de manière discontinue, intervalle par intervalle.

Ainsi, à la différence de l'art antérieur mentionné précédemment, le pas p reste constant et égal à 2.7mm le long de l'axe principal $\Delta$ et la forme générale du réseau de distribution reste rectangulaire. Par le fait que les canaux de distribution présentent des ondulations latérales avec une demi-période d(x) qui varie longitudinalement, la largeur locale $l_c(x)$ des canaux de distribution est effectivement décorrélée de la largeur locale $l_d(x)$ des nervures de séparation, permettant ainsi d'améliorer les performances de la cellule électrochimique.

La figure 6A illustre, de manière schématique et partielle, et en vue de dessus, un réseau de distribution d'une plaque de maintien selon un deuxième mode de réalisation. Les canaux de distribution comportent donc des ondulations latérales selon la configuration B (portions courbes uniquement).

D'une manière générale, les ondulations latérales selon la configuration B peuvent être des arcs de cercle définis par le rayon de courbe Ri et par l'angle d'étendue angulaire $\beta_i$, comme mentionné précédemment en référence à la fig.4A. Elles peuvent également être des portions courbes de type sinusoïdal, ou autre. Quoi qu'il en soit, la ligne génératrice y(x) des ondulations latérales présente localement un angle d'inclinaison par rapport à l'axe principal $\Delta$ qui varie sur l'intervalle Ii considéré. Il présente des valeurs nulles aux extrema $x_{i-1}$ et $x_i$ et une valeur maximale, en valeur absolue, entre ces extrema. La ligne génératrice y(x) présente une dérivée continue, de valeur nulle, aux positions $\{x_i\}_{i=1,N}$.

Une plaque de maintien selon le deuxième mode de réalisation, dont les ondulations latérales des canaux de distribution sont du type de la configuration B, peut être réalisée par un procédé similaire ou identique au premier procédé de fabrication décrit précédemment en référence à la fig.4B, c'est-à-dire sur la base d'une formulation géométrique et d'une construction itérative, intervalle par intervalle, des ondulations latérales successives des canaux de distribution.

Ainsi, les étapes 100, 200, 300 sont identiques ou similaires à celles décrites précédemment, et ne sont pas décrites à nouveau ici.

Lors de l'étape 400, on détermine l'ensemble des abscisses $\{x_i\}_{i=1,N}$ correspondant aux positions des extrema successifs de la ligne génératrice d'un canal de distribution. On obtient alors les intervalles $\{I_i\}_{i=1,N}$ et donc l'évolution longitudinale de la demi-période d(x). On détermine également les paramètres géométriques $\{R_i, \beta_i\}_{i=1,N}$ des ondulations latérales pour chaque intervalle $\{I_i\}_{i=1,N}$. Cette étape est similaire à l'étape 400 décrite précédemment, moyennant le fait que la longueur $c_i$ est nulle pour tous les intervalles Ii, du fait de l'absence des portions rectilignes.

Le système d'équations (2) introduit précédemment décrivant les ondulations latérales pour l'intervalle Ii se simplifie alors, et s'écrit de la manière suivante :

$$\begin{cases} \dfrac{1}{l_C(x_{i-1}) + l_D(x_{i-1})} - \dfrac{2\beta_i R_i}{p \times (x_i - x_{i-1})} = 0 \\ A_{C_i} = 2R_i(1 - \cos\beta_i) \\ d_i = x_i - x_{i-1} = 2R_i \sin\beta_i \end{cases} \qquad (2.1)$$

Ce système d'équations (2.1) comporte ainsi trois équations et trois inconnues, à savoir l'abscisse $x_i$ et les paramètres géométriques $R_i$, $\beta_i$ qui définissent la forme des portions courbes en arc de cercle de l'ondulation latérale. Il n'est donc ici pas nécessaire d'imposer au préalable la valeur de l'un des paramètres géométriques pour résoudre ce système d'équations. On obtient alors à la fois la valeur de l'abscisse $x_i$ qui définit l'intervalle Ii et donc la valeur de la demi-période $d(x_i)$, mais également les paramètres $R_i$, $\beta_i$ de l'ondulation latérale.

Cette étape 400 est effectuée pour le premier intervalle $I_1$, permettant ainsi d'obtenir l'abscisse $x_1$ du premier extremum de l'ondulation latérale ainsi que les paramètres géométriques qui la définissent. Cette étape 400 est réitérée de manière successive, intervalle par intervalle, en incrémentant le rang i à chaque fois jusqu'à i=N. Ainsi, on obtient les intervalles $\{I_i\}_{i=1,N}$ ainsi que les paramètres correspondants $\{R_i ; \beta_i\}_{i=1,N}$. A chaque incrémentation du rang i, l'ondulation latérale change de direction suivant l'axe Y.

Lors de l'étape 500, on réalise ensuite la plaque de maintien comportant le réseau de distribution de longueur $L_{tot}$ et de largeur $l_{tot}$, à partir des paramètres définis $l_c(x)$, $l_d(x)$, p et $A_c(x)$, et à partir des paramètres géométriques déterminés $\{R_i ; \beta_i\}_{i=1,N}$, pour les intervalles $\{I_i\}_{i=1,N}$ de la ligne génératrice des canaux de distribution. Les canaux de distribution et les nervures de séparation présentent donc des ondulations latérales formées ici uniquement de portions courbes en arc de cercle (configuration B).

La figure 6B illustre des graphes qui montrent, d'une part, l'évolution longitudinale correspondante des largeurs locales définies $l_c(x)$ et $l_d(x)$, ainsi que celle du pas p et de l'amplitude $A_c(x)$, et d'autre part, l'évolution longitudinale de la demi-période d(x), pour l'exemple de réseau de distribution illustré sur la fig.6A.

Dans cet exemple, le réseau de distribution est de forme générale rectangulaire dans le plan XY, et présente une longueur totale $L_{tot}$ de 100mm et une largeur totale $l_{tot}$ de 50mm. Les canaux de distribution présentent des ondulations latérales selon la configuration B, c'est-à-dire qu'elles comportent chacune des portions courbes, ici en arc de cercle de rayon de courbure Ri et d'angle d'étendue angulaire $\beta_i$. Les paramètres géométriques $\{R_i, \beta_i\}_{i=1,N}$ sont constantes par intervalles $\{I_i\}_{i=1,N}$ et varient de manière discontinue intervalle par intervalle, tout comme la demi-période d(x).

L'évolution longitudinale de la largeur locale $l_c(x)$ des canaux de distribution est définie comme étant constante et égale à 0.8mm. L'évolution longitudinale de la largeur locale moyenne $l_d(x)$ des nervures de séparation est définie comme variant continûment de 1.6mm à l'entrée à 1.0mm en sortie.

Le pas p d'agencement latéral des canaux de distribution est défini comme étant égal à 2.5mm. On définit également l'évolution longitudinale de l'amplitude $A_c(x)$ comme étant constante et égale à 2.6mm.

On détermine ensuite les intervalles $\{I_i\}_{i=1,N}$ et les valeurs des paramètres géométriques $\{R_i, \beta_i\}_{i=1,N}$, en commençant tout d'abord par le premier intervalle $I_1$ en résolvant le système d'équations (2.1) défini précédemment, puis en réitérant cette étape en incrémentant d'une unité le rang i de l'intervalle considéré jusqu'à i=N.

La fig.6A illustre le réseau de distribution ainsi obtenu. Les zones claires correspondent aux canaux de distribution et les zones sombres aux nervures de séparation. Les traits en pointillé définissent les limites générales du réseau de distribution de dimension $L_{tot}$ et $l_{tot}$. Les canaux de distribution présentent alors des ondulations latérales selon la configuration B.

Comme l'illustre la fig.6B, le rapport $l_d(x)/l_c(x)$ varie ainsi de 2 en entrée du réseau de distribution à 1.25 en sortie du réseau, alors que le pas p reste constant. La demi-période d(x) diminue progressivement, entre les abscisses $x_0$ et $x_N$ du réseau, de manière discontinue, intervalle par intervalle.

Ainsi, à la différence de l'art antérieur mentionné précédemment, le pas p reste constant et égal à 2.5mm le long de l'axe principal Δ et la forme générale du réseau de distribution reste rectangulaire. Par le fait que les canaux de distribution présentent des ondulations latérales avec une demi-période d(x) qui varie longitudinalement, la largeur locale $l_c(x)$ des canaux de distribution est effectivement décorrélée de la largeur locale $l_d(x)$ des nervures de séparation, permettant ainsi d'améliorer les performances de la cellule électrochimique.

En variante, la plaque de maintien selon le deuxième mode de réalisation (configuration B) peut être réalisée par un deuxième procédé de fabrication, qui repose sur une formulation algébrique utilisant une fonction d'évolution v(t) et, comme pour le premier procédé, sur une construction itérative des ondulations latérales successives des canaux de distribution, intervalle par intervalle.

La figure 6C est un organigramme d'un tel deuxième procédé de fabrication d'une plaque de maintien selon le deuxième mode de réalisation.

Les étapes 100, 200, 300 sont identiques ou similaires à celles décrites précédemment, et ne sont pas décrites à nouveau ici.

Lors d'une étape 400, on détermine l'ensemble des abscisses $\{x_i\}_{i=1,N}$ correspondant aux positions des extrema successifs de la ligne génératrice d'un canal de distribution, de sorte qu'on obtient les intervalles $\{I_i\}_{i=1,N}$ et donc l'évolution longitudinale de la demi-période d(x). On détermine également la fonction de trajectoire y(x) de la ligne génératrice des ondulations latérales définie pour chaque intervalle $\{I_i\}_{i=1,N}$. Pour cela, l'étape 400 comporte les deux sous-étapes suivantes.

Dans une sous-étape 401, on définit la fonction de trajectoire y(x) de la ligne génératrice, qui peut s'écrire, pour l'intervalle Ii, de la manière suivante :

$$y(x) = -s(x_{i-1}) \times \frac{A_c(x_{i-1})}{2} + s(x_{i-1}) \times \frac{A_c(x_{i-1}) + A_c(x_i)}{2} \times v\left(\frac{x - x_{i-1}}{x_i - x_{i-1}}\right) \qquad (3)$$

Dans l'équation ci-dessus, la fonction s est la fonction de changement de signe aux extrema, qui prend la valeur $\pm 1$ constante entre deux extrema consécutifs, avec $s(x_i)=-s(x_{i-1})$, et la valeur $s(x_0)$ est prédéfinie comme étant égale à +1 ou à -1 selon que la ligne génératrice s'étend d'un côté ou de l'autre de l'axe principal $\Delta$ à partir de $x_0$.

Par ailleurs, v(t) est une fonction d'évolution, croissante pour $t \in [0 ; 1]$, avec v(0)=0 et v(1)=1. Ici, dans la mesure où les ondulations latérales sont des portions courbes, la fonction v(t) est choisie de sorte que sa dérivée aux extrémités est nulle : v'(0)=0 et v'(1)=0, et peut être du type sinusoïdal tel que $v(t)=1/2-1/2\times\cos(\pi t)$, voire être du type polynomial tel que $v(t)=-2t^3+3t^2$, entre autres, ce qui permet de faciliter la réalisation des canaux de distribution et à limiter les pertes de charge aux extrema de la ligne génératrice y(x). La fonction v(t) peut également dépendre de l'abscisse x, par exemple de la manière suivante $v(x,t)=-(2+x/L_{tot})\times t^{3+x/Ltot}+(3+x/L_{tot})\times t^{2+x/Ltot}$.

Dans une sous-étape 402, on détermine l'ensemble des abscisses $\{x_i\}_{i=1,N}$ correspondant aux positions des extrema successifs de la ligne génératrice d'un canal de distribution, de manière itérative, en commençant par le premier intervalle $I_1$.

Pour cela, on remarque, dans cette configuration B, que la longueur $L_c$ d'un canal sur l'intervalle Ii s'exprime en fonction de y(x) de la ligne génératrice définie précédemment par la relation suivante, sur l'intervalle $I_i$ :

$$L_c(x_i) = \int_{x_{i-1}}^{x_i} \sqrt{1 + y'(x)^2}dx$$

Aussi, l'équation (1) introduite précédemment peut s'écrire d'une manière générale, sur l'intervalle Ii, sous la forme suivante :

$$\frac{\int_{x_{i-1}}^{x_i} l_c(x)dx}{\int_{x_{i-1}}^{x_i} l_c(x)dx + \int_{x_{i-1}}^{x_i} l_d(x)dx} - \frac{\int_{x_{i-1}}^{x_i} l_c(x) \times \sqrt{1 + y'(x)^2}dx}{p \times (x_i - x_{i-1})} = 0 \qquad (4)$$

L'étape 402 est effectuée pour le premier intervalle $I_1$, permettant ainsi d'obtenir l'abscisse $x_1$ du premier extremum de l'ondulation. Par souci de simplification, on peut choisir $y(x_0)=\pm A_c(x_0)/2$. Elle est réitérée de manière successive, intervalle par intervalle, en incrémentant le rang i à chaque fois jusqu'à i=N. Ainsi, on obtient les abscisses $\{x_i\}_{i=1,N}$. Cette équation (4) peut être résolue par des méthodes classiques de résolution numérique, par exemple par une méthode de Newton ou équivalent. Cette relation (4) est valable pour les différentes configurations A, B, C et D, ainsi que pour les différentes formulations (géométrique et algébrique) des ondulations latérales.

On détermine également l'évolution longitudinale y(x) pour tous les intervalles $\{I_i\}_{i=1,N}$, c'est-à-dire pour x allant de $x_0$ à $x_N$. En effet, connaissant l'évolution longitudinale de la demi-période d(x), c'est-à-dire connaissant les intervalles $\{I_i\}_{i=1,N}$ et les positions d'extrema $\{x_i\}_{i=1,N}$, on obtient l'évolution longitudinale de la ligne génératrice y(x) sur toute la longueur $L_{tot}$ du réseau de distribution. La ligne géométrique peut être construire, intervalle par intervalle, à partir de $x_0$ jusqu'à $x_N$.

Lors d'une étape 500, on réalise ensuite la plaque de maintien comportant un réseau de distribution de longueur $L_{tot}$ et de largeur $l_{tot}$, à partir des paramètres définis $l_c(x)$, $l_d(x)$, p et Ac(x), et à partir de la fonction de trajectoire y(x) de la ligne génératrice des ondulations latérales définie sur les intervalles $\{I_i\}_{i=1,N}$. Les canaux de distribution et les nervures de séparation présentent donc des ondulations latérales formées ici chacune d'une portion courbe (configuration B).

En variante, des simplifications peuvent être effectuées. Ainsi, les largeurs locales moyennes $\overline{l_c}(x_i)$ et $\overline{l_d}(x_i)$ peuvent être définies égales à $l_c(x_{i_1})$ et à $l_d(x_{i-1})$. L'équation (4) peut ainsi être reformulée, entre autres, en :

$$\frac{l_c(x_{i-1})}{l_c(x_{i-1}) + l_d(x_{i-1})} - \frac{\int_{x_{i-1}}^{x_i} l_c(x) \times \sqrt{1 + y'(x)^2}dx}{p \times (x_i - x_{i-1})} = 0$$

voire en :

$$\frac{1}{l_c(x_{i-1}) + l_d(x_{i-1})} - \frac{\int_{x_{i-1}}^{x_i} \sqrt{1 + y'(x)^2}dx}{p \times (x_i - x_{i-1})} = 0$$

La figure 7A illustre, de manière schématique et partielle, et en vue de dessus, un réseau de distribution d'une plaque de maintien selon un troisième mode de réalisation. Les canaux de distribution comportent donc des ondulations latérales selon la configuration C (portions strictement rectilignes uniquement).

D'une manière générale, chaque ondulation latérale selon la configuration C est formée uniquement de portions rectilignes définies par une longueur $c_i$ et par un angle d'inclinaison $\beta_i$ par rapport à l'axe principal $\Delta$, comme mentionné précédemment en référence à la fig.4A. La ligne génératrice y(x) des ondulations latérales présente localement un angle d'inclinaison $\alpha(x)$ par rapport à l'axe principal $\Delta$ qui reste constant sur chaque intervalle Ii considéré. Du fait de la forme en dents de scie des ondulations latérales, la ligne génératrice y(x) présente une dérivée discontinue aux positions $\{x_i\}_{i=1,N}$.

Une plaque de maintien selon le troisième mode de réalisation, dont les ondulations latérales des canaux de distribution sont du type de la configuration C, peut être réalisée par un procédé similaire ou identique au premier procédé décrit précédemment en référence à la fig.4B, c'est-à-dire sur la base d'une formulation géométrique et d'une construction itérative, intervalle par intervalle, des ondulations latérales successives des canaux de distribution.

Ainsi, les étapes 100, 200, 300 sont identiques ou similaires à celles décrites précédemment, et ne sont pas décrites à nouveau ici.

Lors de l'étape 400, on détermine l'ensemble des abscisses $\{x_i\}_{i=1,N}$ correspondant aux positions des extrema successifs de la ligne génératrice d'un canal de distribution. On obtient alors les intervalles $\{I_i\}_{i=1,N}$ et donc l'évolution longitudinale de la demi-période d(x). On détermine également les paramètres géométriques $\{c_i, \beta_i\}_{i=1,N}$ des ondulations latérales pour chaque intervalle $\{I_i\}_{i=1,N}$. Cette étape est similaire à l'étape 400 décrite précédemment, moyennant le fait que la longueur $c_i$ est non nulle et que le rayon de courbure Ri est nul pour tous les intervalles Ii, du fait de l'absence des portions courbes.

Le système d'équations (2) introduit précédemment décrivant les ondulations latérales pour l'intervalle $I_i$ se simplifie alors, et s'écrit de la manière suivante :

$$\begin{cases} \dfrac{1}{l_C(x_{i-1}) + l_D(x_{i-1})} - \dfrac{c_i}{p \times (x_i - x_{i-1})} = 0 \\ A_{C_i} = c_i \sin\beta_i \\ d_i = x_i - x_{i-1} = c_i \cos\beta_i \end{cases} \quad (2.2)$$

Ce système d'équations (2.2) comporte ainsi trois équations et trois inconnues, à savoir l'abscisse $x_i$ et les paramètres géométriques $c_i$, $\beta_i$ qui définissent la forme des portions rectilignes de l'ondulation latérale. On obtient alors à la fois la valeur de l'abscisse $x_i$ qui définit l'intervalle Ii et donc la valeur de la demi-période d(xi), mais également les paramètres $c_i$, $\beta_i$ de l'ondulation latérale.

Cette étape 400 est effectuée pour le premier intervalle $I_1$, permettant ainsi d'obtenir l'abscisse $x_1$ du premier extremum de l'ondulation latérale ainsi que les paramètres géométriques qui la définissent. Cette étape 400 est réitérée de manière successive, intervalle par intervalle, en incrémentant le rang i à chaque fois jusqu'à i=N. Ainsi, on obtient les intervalles $\{I_i\}_{i=1,N}$ ainsi que les paramètres correspondants $\{c_i ; \beta_i\}_{i=1,N}$. A chaque incrémentation du rang i, l'ondulation latérale change de direction suivant l'axe Y.

Lors d'une étape 500, on réalise ensuite la plaque de maintien comportant le réseau de distribution de longueur $L_{tot}$ et de largeur $l_{tot}$, à partir des paramètres définis $l_c(x)$, $l_d(x)$, p et Ac(x), et à partir des paramètres géométriques déterminés $\{c_i ; \beta_i\}_{i=1,N}$, pour les intervalles $\{I_i\}_{i=1,N}$ de la ligne génératrice des canaux de distribution. Les canaux de distribution et les nervures de séparation présentent donc des ondulations latérales formées ici uniquement de portions rectilignes.

En variante, la plaque de maintien selon le troisième mode de réalisation peut être réalisée par une variante du deuxième procédé de fabrication, qui repose ici également sur une formulation algébrique utilisant une fonction d'évolution v(t) et sur une construction itérative, intervalle par intervalle, des ondulations latérales successives des canaux de distribution.

Ainsi, les étapes 100, 200, 300 sont identiques ou similaires à celles décrites précédemment, et ne sont pas décrites à nouveau ici.

Lors d'une étape 400, on détermine l'ensemble des abscisses $\{x_i\}_{i=1,N}$ correspondant aux positions des extrema successifs de la ligne génératrice d'un canal de distribution, de sorte qu'on obtient les intervalles $\{I_i\}_{i=1,N}$ et donc l'évolution longitudinale de la demi-période d(x). On détermine également la fonction de trajectoire y(x) de la ligne génératrice des ondulations latérales définie pour chaque intervalle $\{I_i\}_{i=1,N}$. Pour cela, l'étape 400 comporte les deux sous-étapes suivantes.

Dans la sous-étape 401, on définit la fonction de trajectoire y(x) de la ligne génératrice. Elle peut s'écrire sur l'intervalle Ii, pour $x \in I_i = [x_{i-1} ; x_i]$, comme indiqué précédemment, avec s la fonction de changement de signe, et avec v la fonction d'évolution. Cependant, selon cette variante, la fonction d'évolution v présente une dérivée non nulle aux extrema : $v'(0)\neq 0$ et $v'(1)\neq 0$, et correspond ici à la fonction $v(t)=t$.

Dans la sous-étape 402, on détermine l'ensemble des abscisses $\{x_i\}_{i=1,N}$ correspondant aux positions des extrema successifs de la ligne génératrice d'un canal de distribution, de manière itérative, en commençant par le premier intervalle $I_1$.

Pour cela, on résout l'équation (4) mentionnée précédemment, tout d'abord pour le premier intervalle $I_1$, puis pour les intervalles $I_i$ suivants, en réitérant cette étape 402 de manière itérative en incrémentant le rang i. On détermine également l'évolution longitudinale y(x) pour tous les intervalles $\{I_i\}_{i=1,N}$, c'est-à-dire pour x allant de $x_0$ à $x_N$.

Lors de l'étape 500, on réalise ensuite la plaque de maintien comportant un réseau de distribution de longueur $L_{tot}$ et de largeur $l_{tot}$, à partir des paramètres définis $l_c(x)$, $l_d(x)$, p et Ac(x), et à partir de la fonction de trajectoire y(x) de la ligne génératrice des ondulations latérales définie sur les intervalles $\{I_i\}_{i=1,N}$. Les canaux de distribution et les nervures de séparation présentent donc des ondulations latérales formées ici chacune d'une portion rectiligne (configuration C).

En variante, la plaque de maintien selon le troisième mode de réalisation peut être réalisée par un troisième procédé de fabrication, qui repose ici sur une formulation algébrique directe des ondulations latérales, et sur une construction itérative, intervalle par intervalle, des ondulations successives des canaux de distribution.

Les étapes 100, 200, 300 sont identiques ou similaires à celles décrites précédemment, et ne sont pas décrites à nouveau ici.

Lors d'une étape 400, on détermine l'ensemble des abscisses $\{x_i\}_{i=1,N}$ correspondant aux positions des extrema successifs de la ligne génératrice d'un canal de distribution. On obtient alors les intervalles $\{I_i\}_{i=1,N}$ et donc l'évolution longitudinale de la demi-période d(x). On détermine également la fonction de trajectoire y(x) de la ligne génératrice des ondulations latérales définie pour chaque intervalle $\{I_i\}_{i=1,N}$. Pour cela, l'étape 400 comporte les deux sous-étapes suivantes.

Dans une sous-étape 401, on détermine l'ordonnée de départ de l'ondulation $y(x_0)$ et le sens initial de variation de la trajectoire $s(x_0)$, ainsi que l'angle d'inclinaison $\alpha(x)$ que forme chaque portion rectiligne des ondulations latérales vis-à-vis de l'axe principal $\Delta$. Cet angle d'inclinaison s'écrit de la manière suivante, pour tout x compris entre $x_0$ et $L_{tot}$ :

$$|\alpha(x)| = \cos^{-1}\frac{l_c(x) + l_d(x)}{p}$$

Dans une sous-étape 402, on détermine l'ensemble des abscisses $\{x_i\}_{i=1,N}$ correspondant aux positions des extrema successifs de la ligne génératrice d'un canal de distribution, de manière itérative, en commençant par le premier intervalle $I_1$.

Pour cela, on détermine la valeur de $x_1$ du premier intervalle $I_1$, puis la valeur des abscisses $x_i$ suivants. L'abscisse $x_1$ puis les abscisses $x_i$ suivantes sont déterminées en résolvant l'équation correspondante :

*Pour i* = 1,

$$\frac{A_c(x_1)}{2} - (x_1 - x_0) \times \tan|\alpha(x_0)| = s(x_0) \times y(x_0)$$

*Pour i* > 1,

$$(x_i - x_{i-1}) \times \tan|\alpha(x_{i-1})| = \frac{A_c(x_i)}{2} + \frac{A_c(x_{i-1})}{2}$$

*Pour x* $\in$ *$I_i$,*

$$y(x) = y(x_{i-1}) + s(x_{i-1}) \times (x - x_{i-1}) \times \tan|\alpha(x_{i-1})|$$

avec $s(x_0)$ = +1 si la trajectoire est montante (y'(x)>0) dans l'intervalle $I_1$, ou $s(x_0)$ = -1 si elle est descendante.

Il est alors possible de déterminer $x_1$, et donc, en réitérant cette étape 402 en incrémentant le rang i d'une unité à chaque fois, d'obtenir l'ensemble des positions $\{x_i\}_{i=1,N}$ des extrema successifs.

On détermine également l'évolution longitudinale y(x) pour tous les intervalles $\{I_i\}_{i=1,N}$, c'est-à-dire pour x allant de $x_0$=0 à $L_{tot}$. En effet, connaissant l'évolution longitudinale de la demi-période d(x), c'est-à-dire connaissant les intervalles $\{I_i\}_{i=1,N}$ et les positions d'extrema $\{x_i\}_{i=1,N}$, on obtient l'évolution longitudinale de la ligne génératrice y(x) sur toute la longueur $L_{tot}$ du réseau de distribution. La ligne géométrique peut être construire, intervalle par intervalle, à partir de $x_0$ jusqu'à $x_N$.

Lors d'une étape 500, on réalise ensuite la plaque de maintien comportant un réseau de distribution de longueur $L_{tot}$ et de largeur $l_{tot}$, à partir des paramètres définis $l_c(x)$, $l_d(x)$, p et Ac(x), et à partir de la fonction de trajectoire y(x) de la ligne génératrice des ondulations latérales définie sur les intervalles $\{I_i\}_{i=1,N}$. Les canaux de distribution et les nervures de séparation présentent donc des ondulations latérales formées ici chacune d'une portion rectiligne.

La figure 7B illustre des graphes qui montrent, d'une part, l'évolution longitudinale correspondante des largeurs locales définies $l_c(x)$ et $l_d(x)$, ainsi que celle du pas p et de l'amplitude $A_c(x)$, et d'autre part, l'évolution longitudinale de la demi-période d(x), pour l'exemple de réseau de distribution illustré sur la fig.7A.

Dans cet exemple, le réseau de distribution est de forme générale rectangulaire dans le plan XY, et présente une longueur totale $L_{tot}$ de 100mm et une largeur totale $l_{tot}$ de 52mm. Les canaux de distribution présentent des ondulations latérales selon la configuration C, c'est-à-dire qu'elles comportent chacune des portions rectilignes, de longueur $c_i$ et d'angle d'inclinaison $\alpha(x_i)$. Les paramètres géométriques $\{c_i\}_{i=1,N}$ et $\alpha(x_i)$ sont constantes par intervalles $\{I_i\}_{i=1,N}$ et varient de manière discontinue intervalle par intervalle, tout comme la demi-période d(x).

L'évolution longitudinale de la largeur locale $l_c(x)$ des canaux de distribution est définie comme augmentant continûment entre 0.8mm et 1.2mm. L'évolution longitudinale de la largeur locale moyenne $l_d(x)$ des nervures de séparation est définie comme variant continûment de 1.7mm à l'entrée à 0.6mm en sortie.

Le pas p d'agencement latéral des canaux de distribution est défini comme étant égal à 2.6mm. On définit également l'évolution longitudinale de l'amplitude $A_c(x)$ comme variant continûment de 2.6mm en entrée jusqu'à 4.0mm en sortie.

On détermine ensuite les abscisses $\{x_i\}_{i=1,N}$ des extrema définissant les intervalles Ii, ainsi que la fonction trajectoire y(x) pour le premier intervalle $I_1$ comme défini précédemment, puis en réitérant cette étape en incrémentant d'une unité le rang i de l'intervalle considéré, jusqu'à i=N.

La fig.7A illustre le réseau de distribution ainsi obtenu. Les zones claires correspondent aux canaux de distribution et les zones sombres aux nervures de séparation. Les traits en pointillé définissent les limites générales du réseau de distribution de dimension $L_{tot}$ et $l_{tot}$. Les canaux de distribution présentent alors des ondulations latérales selon la configuration C.

Comme l'illustre la fig.7B, le rapport $l_d(x)/l_c(x)$ varie ainsi de 2.25 en entrée du réseau de distribution à 0.5 en sortie du réseau, alors que le pas p reste constant. La demi-période d(x) diminue progressivement, entre l'entrée et la sortie du réseau, de manière discontinue, intervalle par intervalle.

Ainsi, à la différence de l'art antérieur mentionné précédemment, le pas p reste constant et égal à 2.6mm le long de l'axe principal $\Delta$ et la forme générale du réseau de distribution reste rectangulaire. Par le fait que les canaux de distribution présentent des ondulations latérales avec une demi-période d(x) qui varie longitudinalement, la largeur locale $l_c(x)$ des canaux de distribution est effectivement décorrélée de la largeur locale $l_d(x)$ des nervures de séparation, permettant ainsi d'améliorer les performances de la cellule électrochimique.

La figure 8A illustre, de manière schématique et partielle, et en vue de dessus, un réseau de distribution d'une plaque de maintien selon un quatrième mode de réalisation. Les canaux de distribution comportent donc des ondulations latérales selon la configuration D.

D'une manière générale, les ondulations latérales selon la configuration D sont chacune formées uniquement de portions sensiblement rectilignes présentant une légère courbure, et s'étendent sous la forme de dents de scie. La ligne génératrice y(x) des ondulations latérales présente localement un angle d'inclinaison $\alpha$(x) par rapport à l'axe principal $\Delta$ qui varie continûment sur chaque intervalle Ii considéré.

De plus, comme pour la configuration C, la dérivée de la ligne génératrice y(x) présente une discontinuité aux positions $\{x_i\}_{i=1,N}$. Cependant, cette configuration D diffère de la configuration C en ce que l'angle $\alpha$(x) varie suivant l'axe principal $\Delta$ sur un même intervalle Ii, alors qu'il reste constant sur un même intervalle dans le cas de la configuration C.

Une plaque de maintien selon le quatrième mode de réalisation, dont les ondulations latérales des canaux de distribution sont du type de la configuration D, peut être réalisée par un procédé similaire ou identique au troisième procédé décrit précédemment en référence à la configuration C, c'est-à-dire sur la base d'une formulation algébrique directe itérative, intervalle par intervalle, des ondulations latérales successives des canaux de distribution.

Les étapes 100, 200, 300 sont identiques ou similaires à celles décrites précédemment, et ne sont pas décrites à nouveau ici.

Lors d'une étape 400, on détermine l'ensemble des abscisses $\{x_i\}_{i=1,N}$ correspondant aux positions des extrema successifs de la ligne génératrice d'un canal de distribution. On obtient alors les intervalles $\{I_i\}_{i=1,N}$ et donc l'évolution longitudinale de la demi-période d(x). On détermine également la fonction de trajectoire y(x) de la ligne génératrice des ondulations latérales définie pour chaque intervalle $\{I_i\}_{i=1,N}$. Pour cela, l'étape 400 comporte les deux sous-étapes suivantes.

Dans une sous-étape 401, on détermine l'angle d'inclinaison $\alpha$(x) que forme chaque portion rectiligne des ondulations latérales vis-à-vis de l'axe principal $\Delta$. Cet angle d'inclinaison s'écrit de la manière suivante, pour tout x compris entre $x_0$ et $L_{tot}$ :

$$|\alpha(x)| = \cos^{-1}\frac{l_c(x) + l_d(x)}{p}$$

On détermine ensuite une fonction d'évolution u(x) telle que :

$$u(x) = \int_0^x \tan|\alpha(x)|dx$$

On peut alors déterminer la fonction de trajectoire y(x) de la ligne génératrice des canaux de distribution, pour $x \in I_i$, telle que :

$$y(x) = -s(x_{i-1})\frac{A_c(x)}{2} + s(x_{i-1})[u(x) - u(x_{i-1})]$$

où la fonction s est la fonction de changement de signe introduite précédemment.

Dans une sous-étape 402, on détermine l'ensemble des abscisses $\{x_i\}_{i=1,N}$ correspondant aux positions des extrema successifs de la ligne génératrice d'un canal de distribution, de manière itérative, en commençant par le premier intervalle $I_1$.

Pour cela, on détermine la valeur de $x_1$ du premier intervalle $I_1$, puis la valeur des abscisses $x_i$ suivants. L'abscisse $x_1$ puis les abscisses $x_i$ suivantes sont déterminées en résolvant l'équation correspondante :

*Pour i* = 1,

$$\frac{A_c(x_1)}{2} - u(x_1) = s(x_0)y(x_0)$$

*Pour i* > 1,

$$u(x_i) - u(x_{i-1}) = \frac{A_c(x_i)}{2} + \frac{A_c(x_{i-1})}{2}$$

avec $s(x_0) = +1$ si la trajectoire est montante ($y'(x)>0$) dans l'intervalle $I_1$ ou $s(x_0) = -1$ si elle est descendante.

Il est alors possible de déterminer $x_1$, et donc, en réitérant cette étape 402 en incrémentant le rang i d'une unité à chaque fois, d'obtenir l'ensemble des positions $\{x_i\}_{i=1,N}$ des extrema successifs.

On détermine également l'évolution longitudinale y(x) pour tous les intervalles $\{I_i\}_{i=1,N}$, c'est-à-dire pour x allant de $x_0$=0 à $L_{tot}$. En effet, connaissant l'évolution longitudinale de la demi-période d(x), c'est-à-dire connaissant les intervalles $\{I_i\}_{i=1,N}$ et les positions d'extrema $\{x_i\}_{i=1,N}$, on obtient l'évolution longitudinale de la ligne génératrice y(x) sur toute la longueur $L_{tot}$ du réseau de distribution. La ligne géométrique peut être construire, intervalle par intervalle, à partir de $x_0$ jusqu'à $x_N$.

Lors d'une étape 500, on réalise ensuite la plaque de maintien comportant un réseau de distribution de longueur $L_{tot}$ et de largeur $l_{tot}$, à partir des paramètres définis $l_c(x)$, $l_d(x)$, p et Ac(x), et à partir de la fonction de trajectoire y(x) de la ligne génératrice des ondulations latérales définie sur les intervalles $\{I_i\}_{i=1,N}$. Les canaux de distribution et les nervures de séparation présentent donc des ondulations latérales formées ici chacune d'une portion rectiligne.

La figure 8B illustre des graphes qui montrent, d'une part, l'évolution longitudinale correspondante des largeurs locales définies $l_c(x)$ et $l_d(x)$, ainsi que celle du pas p et de l'amplitude $A_c(x)$, et d'autre part, l'évolution longitudinale de la demi-période d(x), pour l'exemple de réseau de distribution illustré sur la fig.8A.

Dans cet exemple, le réseau de distribution est de forme générale rectangulaire dans le plan XY, et présente une longueur totale $L_{tot}$ de 150mm et une largeur totale $l_{tot}$ de 52mm. Les canaux de distribution présentent des ondulations latérales selon la configuration D, c'est-à-dire qu'elles comportent chacune des portions sensiblement rectilignes, de longueur $c_i$ et d'angle d'inclinaison $\alpha(x)$. La longueur $\{c_i\}_{i=1,N}$ est constante par intervalles $\{I_i\}_{i=1,N}$ et varie de manière discontinue intervalle par intervalle, tout comme la demi-période d(x), mais, à la différence de la configuration C, l'angle d'inclinaison $\alpha(x)$ varie continûment sur chaque intervalle.

L'évolution longitudinale de la largeur locale $l_c(x)$ des canaux de distribution est définie comme augmentant continûment entre 0.8mm et 1.2mm. L'évolution longitudinale de la largeur locale moyenne $l_d(x)$ des nervures de séparation est définie comme variant continûment de 1.8mm à l'entrée à 0.6mm en sortie.

Le pas p d'agencement latéral des canaux de distribution est défini comme étant égal à 2.6mm. On définit également l'évolution longitudinale de l'amplitude $A_c(x)$ comme étant constante et égale à 2.8mm.

On détermine ensuite les abscisses $\{x_i\}_{i=1,N}$ des extrema définissant les intervalles Ii, ainsi que la fonction trajectoire y(x) pour le premier intervalle $I_1$ comme défini précédemment, puis en réitérant cette étape en incrémentant d'une unité le rang i de l'intervalle considéré, jusqu'à i=N.

La fig.8A illustre le réseau de distribution ainsi obtenu. Les zones claires correspondent aux canaux de distribution et les zones sombres aux nervures de séparation. Les traits en pointillé définissent les limites générales du réseau de distribution de dimension $L_{tot}$ et $l_{tot}$. Les canaux de distribution présentent alors des ondulations latérales selon la configuration D.

Comme l'illustre la fig.8B, le rapport $l_d(x)/l_n(x)$ varie ainsi de 2.25 en entrée du réseau de distribution à 0.0835 en sortie du réseau, alors que le pas p reste constant. La demi-période d(x) diminue progressivement, entre l'entrée et la sortie du réseau, de manière discontinue, intervalle par intervalle.

Ainsi, à la différence de l'art antérieur mentionné précédemment, la période p reste constante et égale à 2.6mm le long de l'axe principal $\Delta$ et la forme générale du réseau de distribution reste rectangulaire. Par le fait que les canaux de distribution présentent des ondulations latérales avec une demi-période d(x) qui varie longitudinalement, la largeur locale $l_{od}(x)$ des canaux de distribution est effectivement décorrélée de la largeur locale $l_{ns}(x)$ des nervures de séparation, permettant ainsi d'améliorer les performances de la cellule électrochimique.

Des modes de réalisation particuliers viennent d'être décrits. Différentes variantes et modifications apparaîtront à l'homme du métier.

## Revendications

**1.** Procédé de fabrication d'une plaque de maintien (10) d'une cellule électrochimique d'un réacteur électrochimique, destinée à être au contact d'un assemblage membrane électrode de la cellule électrochimique, comportant un réseau de distribution (14) d'un fluide réactif jusqu'à une électrode de l'assemblage membrane électrodes, comportant des canaux de distribution (13) :

- s'étendant longitudinalement, sur au moins une partie du réseau de distribution, suivant un axe principal rectiligne $\Delta$ ;

- présentant une largeur locale $l_c(x)$, et séparés latéralement deux à deux par une nervure de séparation (17) de largeur locale $l_d(x)$, x étant une position suivant l'axe principal Δ suivant le sens d'écoulement du fluide réactif à partir d'une abscisse initiale $x_0$ prédéfinie, le rapport $l_d(x)/l_c(x)$ entre la largeur locale $l_d(x)$ et la largeur locale $l_c(x)$ variant longitudinalement suivant l'axe principal Δ ;
- les canaux de distribution (13) s'étendent longitudinalement suivant l'axe principal Δ de manière à former des ondulations latérales, dans un plan principal parallèle à l'assemblage membrane électrode, présentant une demi-période longitudinale d(x) variant longitudinalement suivant l'axe principal Δ ;

le procédé comportant les étapes suivantes :

◦ définition (100) d'une longueur totale $L_{tot}$ et d'une largeur totale $l_{tot}$ d'au moins une partie du réseau de distribution dans laquelle les canaux de distribution comportent des ondulations latérales ;
◦ définition (200) d'une évolution longitudinale suivant l'axe principal Δ des largeurs locales $l_c(x)$ et $l_d(x)$ ;
◦ détermination (300) d'un pas p d'agencement latéral des canaux de distribution suivant un axe orthogonal à l'axe principal Δ, et d'une évolution longitudinale suivant l'axe principal Δ d'une amplitude $A_c$ d'une ligne génératrice y(x) passant par le centre de chaque canal de distribution, en fonction de la largeur totale $l_{tot}$ et des largeurs locales $l_c(x)$ et $l_d(x)$ ;
◦ détermination (400), de manière itérative, de i=1 à i=N, pour chaque demi-période $d(x_i)$ définie par les abscisses $x_{i-1}$ et $x_i$, $\{x_i\}_{i=1,N}$ étant les abscisses suivant l'axe principal Δ des extrema successifs des ondulations latérales, N étant le nombre de demi-périodes entre l'abscisse initiale $x_0$ et une abscisse finale $x_N$ prédéfinie suivant l'axe principal Δ,

  - de la valeur de l'abscisse $x_i$ de la demi-période $d(x_i)$ correspondante ;
  - de la forme longitudinale de l'ondulation latérale correspondante ;

◦ fabrication (500) de la plaque de maintien, dont le réseau de distribution comporte les canaux de distribution définis par les abscisses $\{x_i\}_{i=1,N}$ déterminées et par la forme longitudinale des ondulations latérales pour chaque demi-période $\{d(x_i)\}_{i=1,N}$ déterminées.

**2.** Procédé de fabrication selon la revendication 1, dans lequel, lors de l'étape de détermination (400) de manière itérative des abscisses $x_i$ et de la forme longitudinale des ondulations latérales, on résout la relation suivante pour chaque demi-période d(xi) :

$$\frac{\int_{x_{i-1}}^{x_i} l_c(x)dx}{\int_{x_{i-1}}^{x_i} l_c(x)dx + \int_{x_{i-1}}^{x_i} l_d(x)dx} - \frac{\int_{x_{i-1}}^{x_i} l_c(x) \times \sqrt{1+y'(x)^2}dx}{p \times (x_i - x_{i-1})} = 0$$

où y' étant la dérivée première de la ligne génératrice y(x) par rapport à x.

**3.** Procédé de fabrication selon la revendication 1 ou 2, dans lequel le pas d'agencement latéral p est constant suivant l'axe principal Δ.

**4.** Procédé de fabrication selon l'une quelconque des revendications 1 à 3, dans lequel l'amplitude $A_c$ présente une évolution longitudinale $A_c(x)$ suivant l'axe principal Δ qui est égale à une valeur constante prédéfinie, ou qui varie entre une valeur initiale prédéfinie et une valeur finale prédéfinie différente de la valeur initiale.

**5.** Procédé de fabrication selon l'une quelconque des revendications 1 à 4, dans lequel chaque ondulation latérale est formée, sur une demi-période $d(x_i)$, d'une portion rectiligne inclinée vis-à-vis de l'axe principal Δ, encadrée par deux portions courbes suivant l'axe principal Δ.

**6.** Procédé de fabrication selon la revendication 5, dans lequel la portion rectiligne présente une longueur $c_i$ et un angle d'inclinaison $\beta_i$ non nul par rapport à l'axe principal Δ, et les portions courbes présentent une forme d'arc de cercle de rayon de courbure Ri et d'angle d'étendue angulaire $\beta_i$.

**7.** Procédé de fabrication selon l'une quelconque des revendications 1 à 4, dans lequel chaque ondulation latérale, sur une demi-période $d(x_i)$, est formée uniquement d'au moins une portion courbe, et ne comporte pas de portion rectiligne d'une longueur $c_i$ non nulle.

**8.** Procédé de fabrication selon la revendication 7, dans lequel chaque ondulation latérale, sur une demi-période $d(x_i)$, est formée de deux portions courbes présentant une forme d'arc de cercle de rayon de courbure $R_i$ et d'angle d'étendue angulaire $\beta_i$.

**9.** Procédé de fabrication selon la revendication 7 ou 8, dans lequel chaque ondulation latérale, sur une demi-période $d(x_i)$, est formée d'une portion courbe dont la ligne génératrice y(x) est fonction des valeurs $Ac(x_{i-1})$ et $A_c(x_i)$ de l'amplitude aux abscisses $x_{i-1}$ et $x_i$, et d'une fonction d'évolution v(t) prédéfinie, où t est compris entre 0 pour l'abscisse $x_{i-1}$ et 1 pour l'abscisse $x_i$, et où la dérivée première de la fonction d'évolution v(t) en 0 et en 1 est nulle.

**10.** Procédé de fabrication selon l'une quelconque des revendications 5 à 9, dans lequel la ligne génératrice y(x) présente une dérivée nulle aux abscisses $\{x_i\}_{i=1,N}$.

**11.** Procédé de fabrication selon l'une quelconque des revendications 1 à 4, dans lequel chaque ondulation latérale, sur une demi-période $d(x_i)$, est formée uniquement d'une portion sensiblement rectiligne, et ne comporte pas de portion courbe ayant un angle d'étendue angulaire non nul.

**12.** Procédé de fabrication selon la revendication 11, dans lequel chaque ondulation latérale, sur une demi-période $d(x_i)$, est formée d'une portion strictement rectiligne présentant une longueur $c_i$ et un angle d'inclinaison $\beta_i$ par rapport à l'axe principal $\Delta$.

**13.** Procédé de fabrication selon la revendication 11 ou 12, dans lequel chaque ondulation latérale, sur une demi-période $d(x_i)$, est formée d'une portion strictement rectiligne dont la ligne génératrice y(x), pour chaque demi-période $d(x_i)$, est fonction des valeurs $Ac(x_{i-1})$ et $A_c(x_i)$ de l'amplitude aux abscisses $x_{i-1}$ et $x_i$, et d'une fonction d'évolution v(t)=t, où t est compris entre 0 pour l'abscisse $x_{i-1}$ et 1 pour l'abscisse $x_i$.

**14.** Procédé de fabrication selon la revendication 11, dans lequel chaque ondulation latérale, sur une demi-période $d(x_i)$, est formée d'une portion sensiblement rectiligne dont une ligne génératrice y(x), pour chaque demi-période $d(x_i)$, est fonction d'un angle d'inclinaison $\alpha(x)$ défini en l'abscisse x suivant l'axe principal $\Delta$, comme étant égal, en valeur absolue, à l'arc-cosinus du rapport entre la somme $l_c(x) + l_d(x)$ des largeurs locales $l_c(x)$ et $l_d(x)$ sur le pas p.

**15.** Procédé de fabrication selon la revendication 14, dans lequel :

- la dérivée de la ligne génératrice y(x) des ondulations latérales est discontinue aux abscisses $\{x_i\}_{i=1,N}$ ;
- chaque ondulation latérale, sur une demi-période $d(x_i)$, est formée soit d'une portion sensiblement rectiligne, l'angle d'inclinaison $\alpha(x)$ variant alors suivant l'axe principal $\Delta$ sur chaque demi-période $d(x_i)$ ; soit d'une portion strictement rectiligne, l'angle d'inclinaison $\alpha(x)$ étant alors constant suivant l'axe principal $\Delta$ sur chaque demi-période $d(x_i)$.

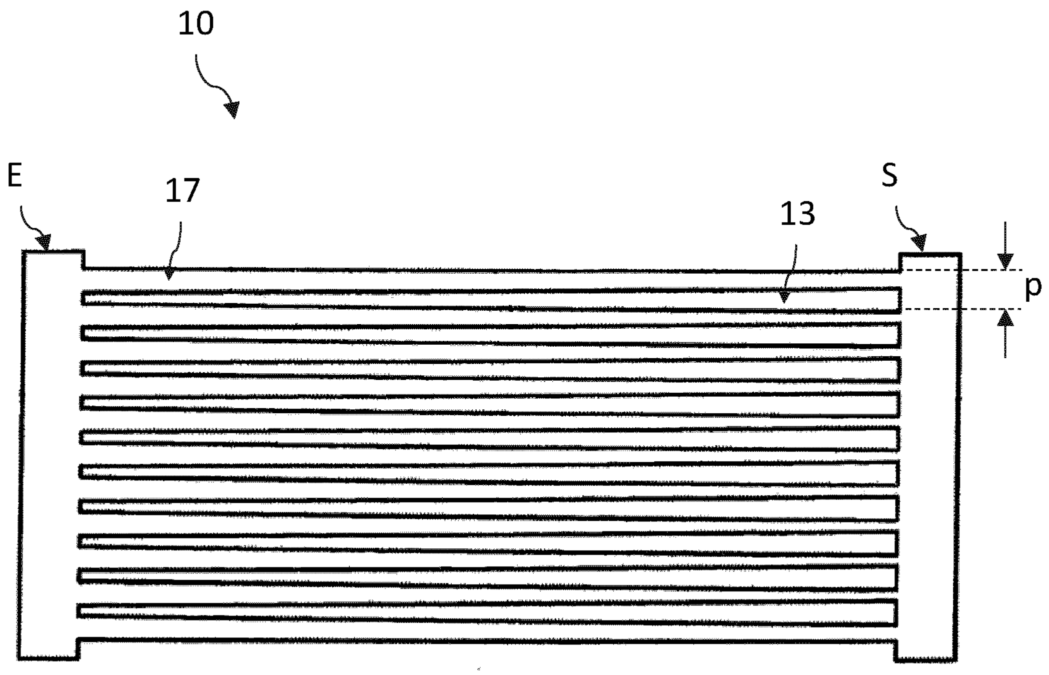


Fig.1

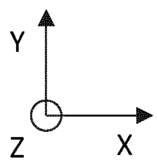

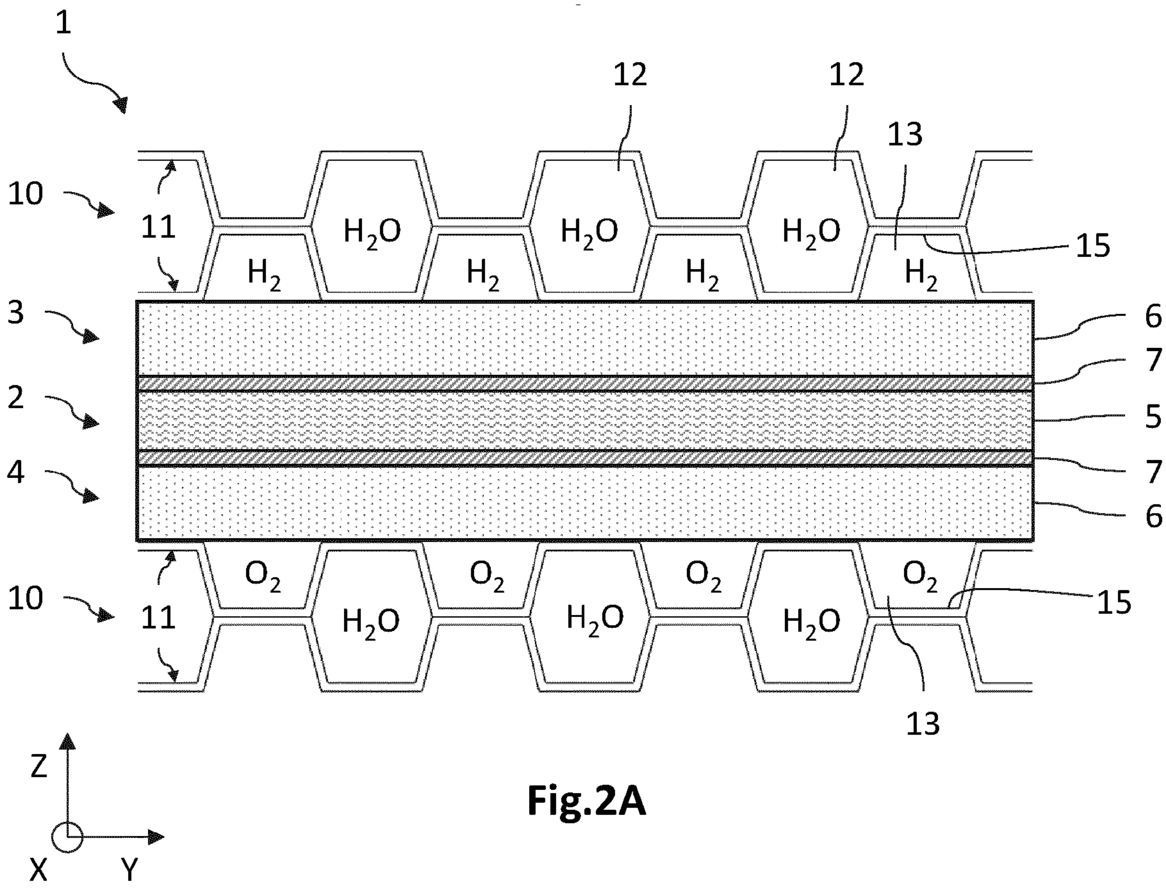
1
12
12
13
10
11
H2O
H2O
H2O
15
H2
H2
H2
H2
3
6
7
2
5
4
7
6
O2
O2
O2
O2
10
11
H2O
H2O
H2O
15
13
Z
X
Y

Fig.2A

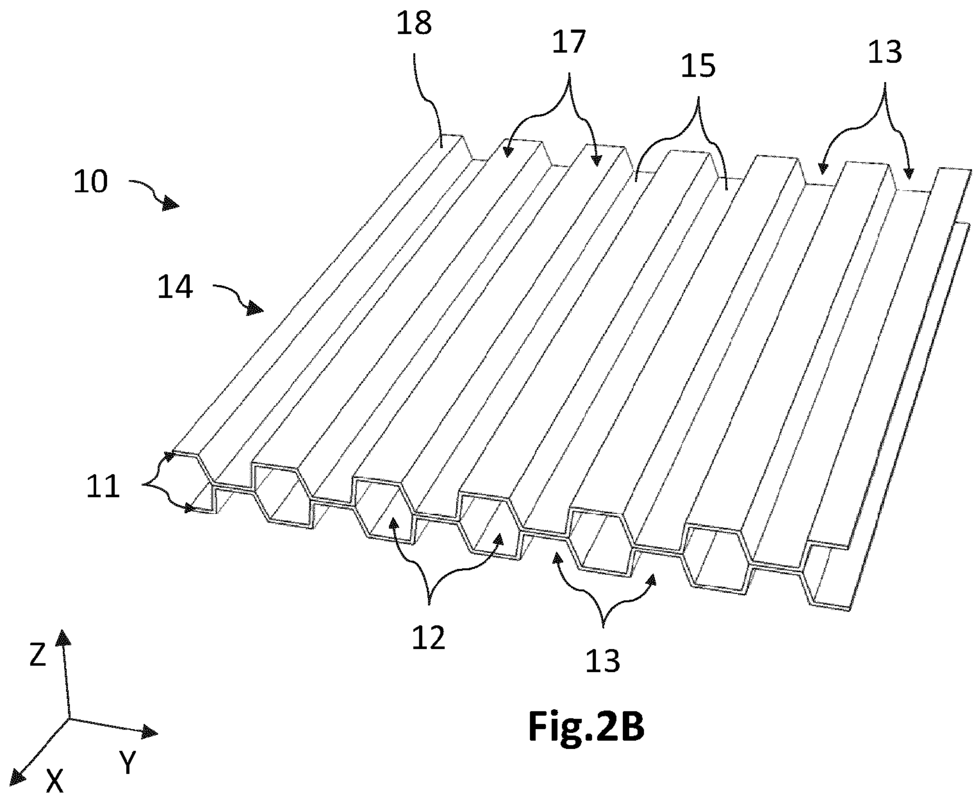
18
17
15
13
10
14
11
12
13
Z
X
Y

Fig.2B

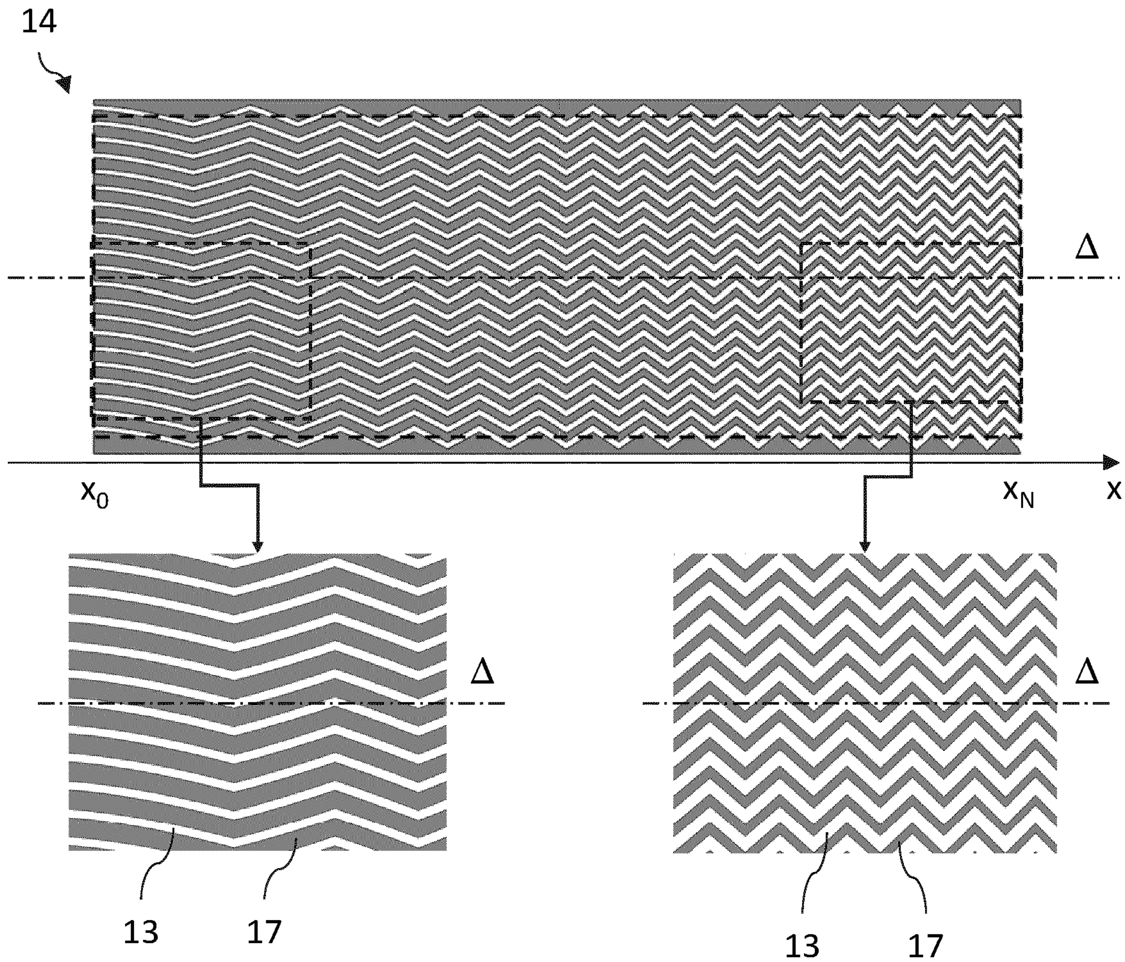
14
Δ
x0
xN
x
Δ
Δ
13
17
13
17

Fig.3A

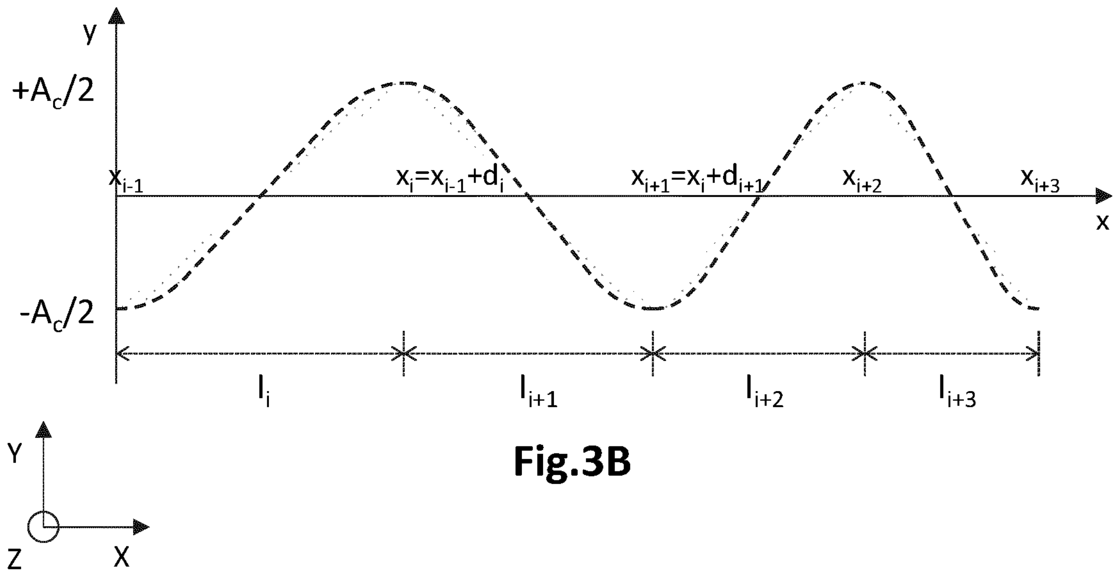
y
+Ac/2
-Ac/2
xi-1
xi=xi-1+di
xi+1=xi+di+1
xi+2
xi+3
x
li
li+1
li+2
li+3
Y
Z
X

Fig.3B

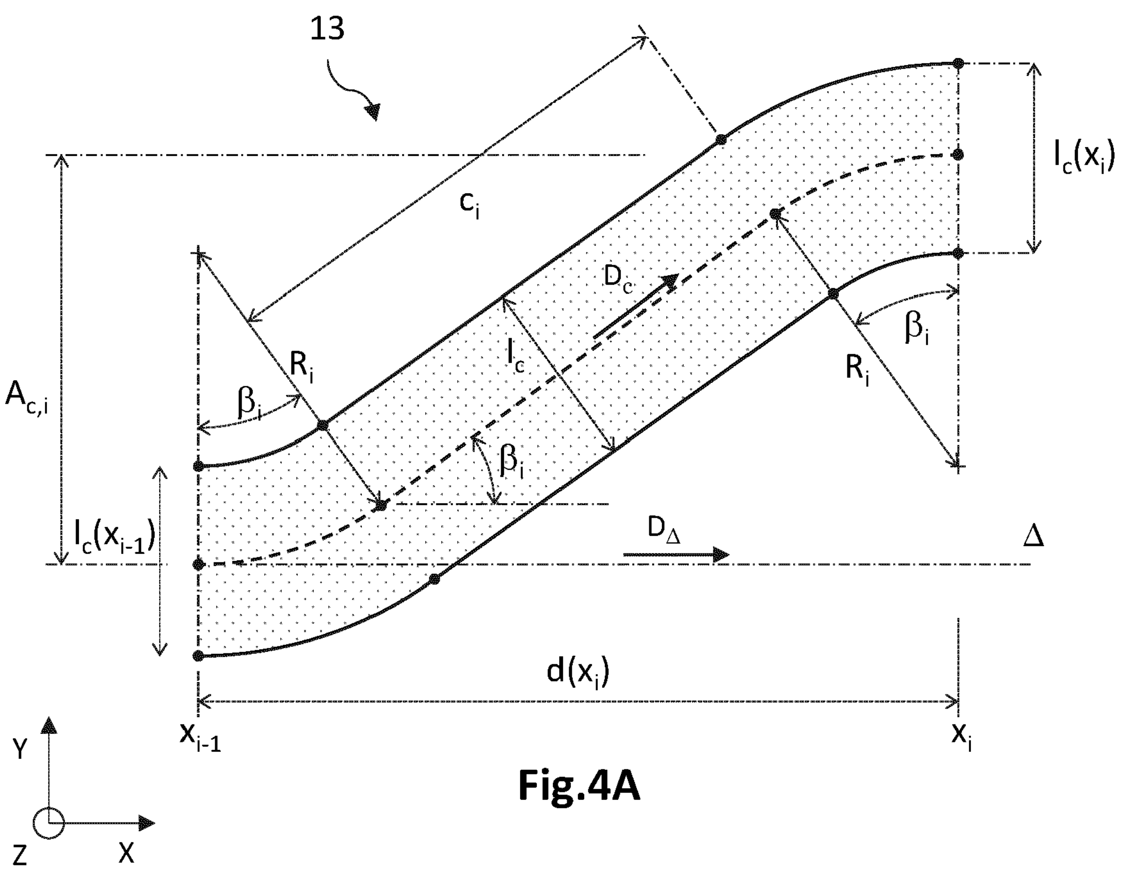
13
$c_i$
$l_c(x_i)$
$D_c$
$\beta_i$
$R_i$
$l_c$
$A_{c,i}$
$R_i$
$\beta_i$
$\beta_i$
$l_c(x_{i-1})$
$D_\Delta$
$\Delta$
$d(x_i)$
$x_{i-1}$
$x_i$
Y
Z
X

Fig.4A

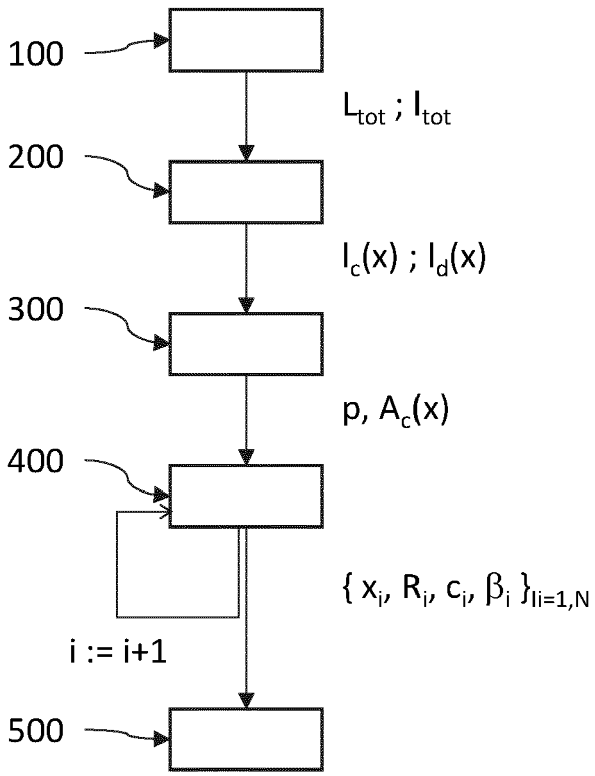
100
$L_{tot}$ ; $l_{tot}$
200
$l_c(x)$ ; $l_d(x)$
300
p, $A_c(x)$
400
$\{ x_i, R_i, c_i, \beta_i \}_{|i=1,N}$
i := i+1
500

Fig.4B

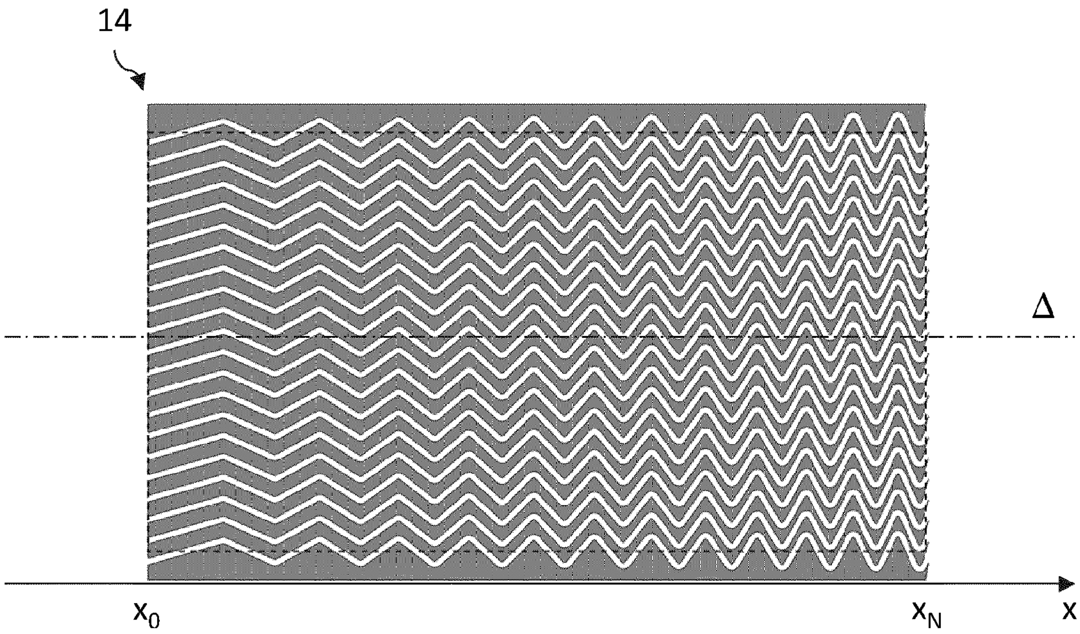


Fig.5A

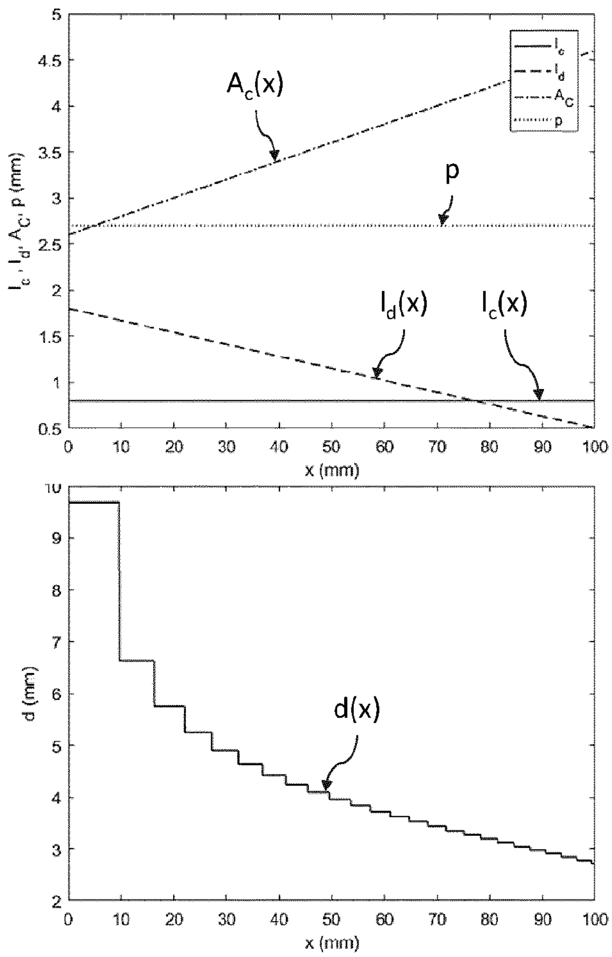


Fig.5B

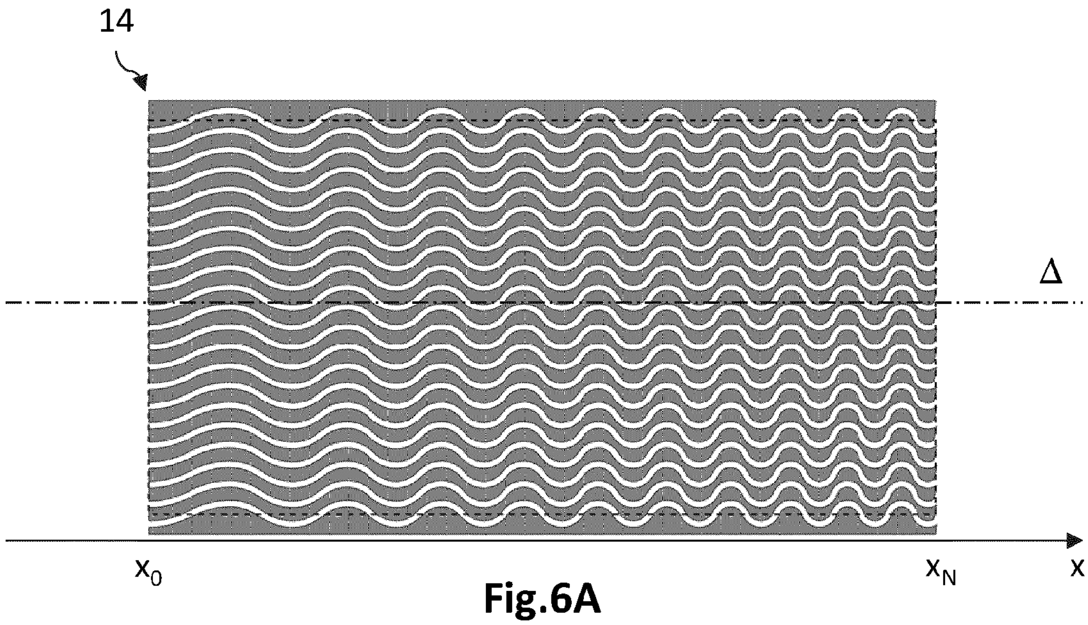


Fig.6A

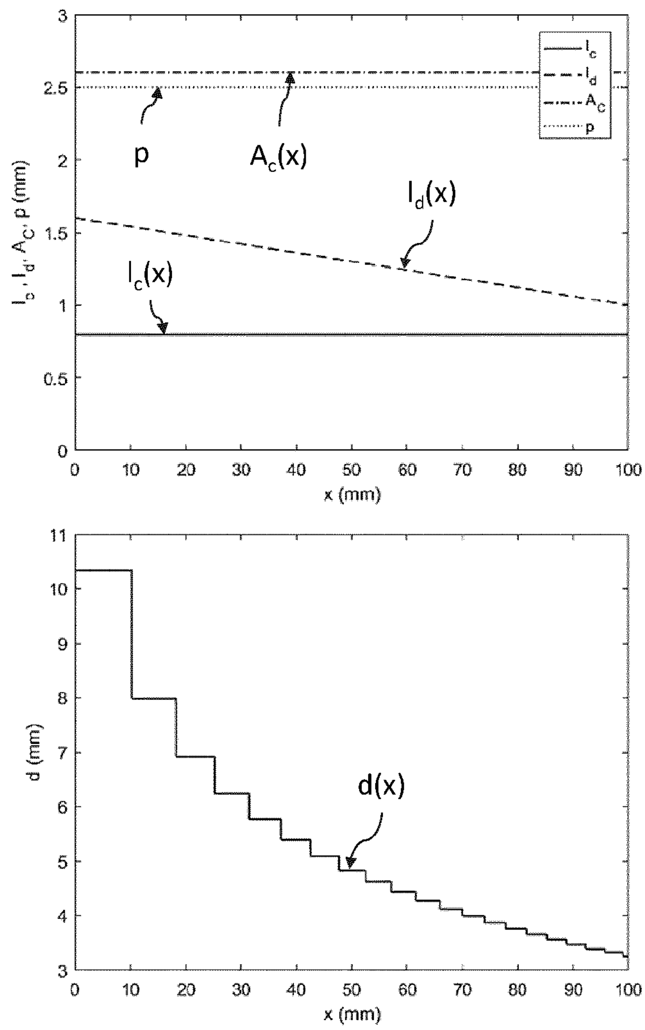


Fig.6B

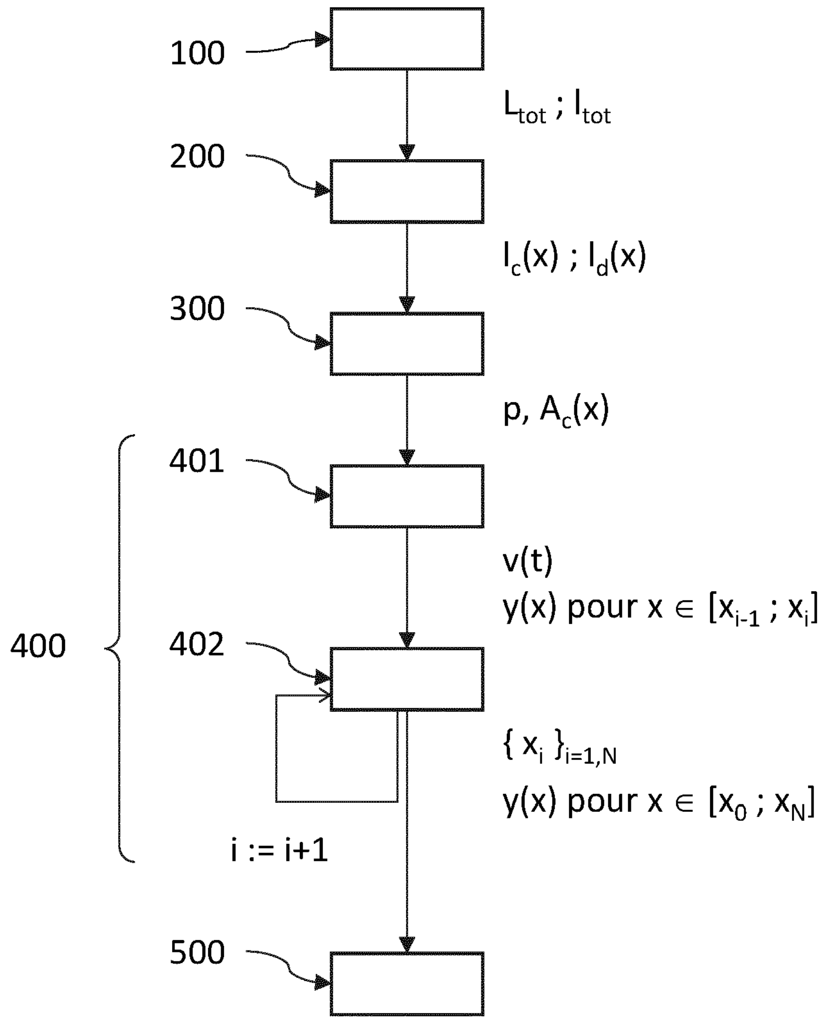
100
$L_{tot}$ ; $l_{tot}$
200
$l_c(x)$ ; $l_d(x)$
300
p, $A_c(x)$
401
v(t)
y(x) pour $x \in [x_{i-1} ; x_i]$
400
402
$\{ x_i \}_{i=1,N}$
y(x) pour $x \in [x_0 ; x_N]$
i := i+1
500

Fig.6C

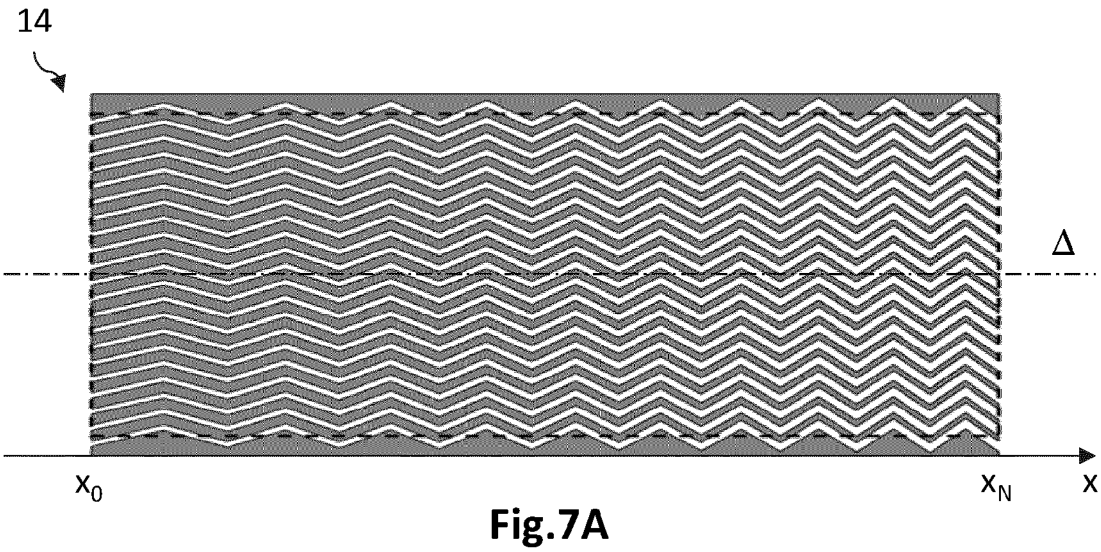


Fig.7A

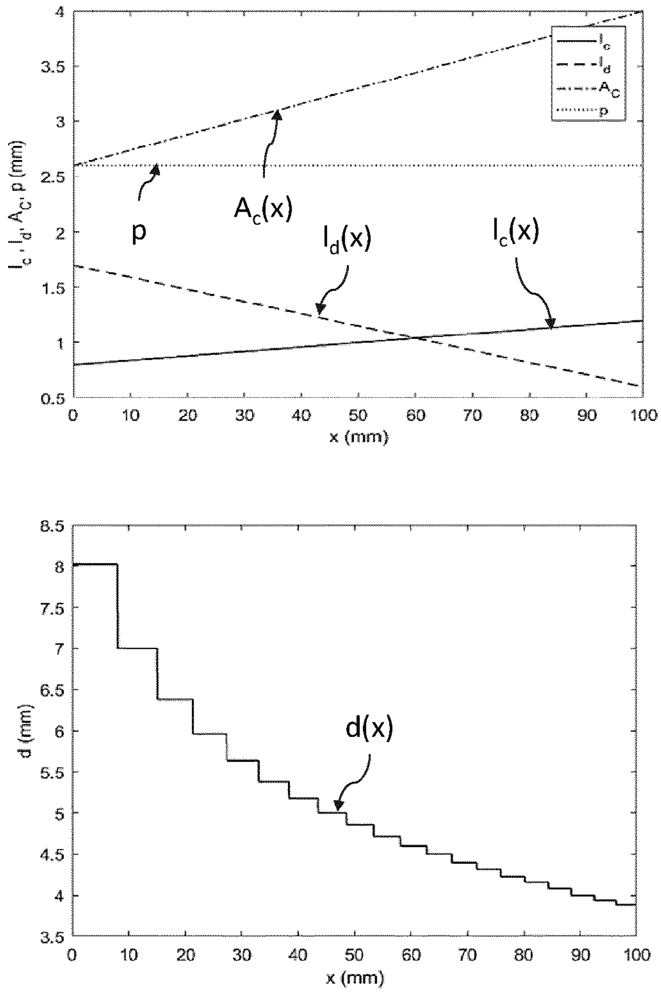


Fig.7B

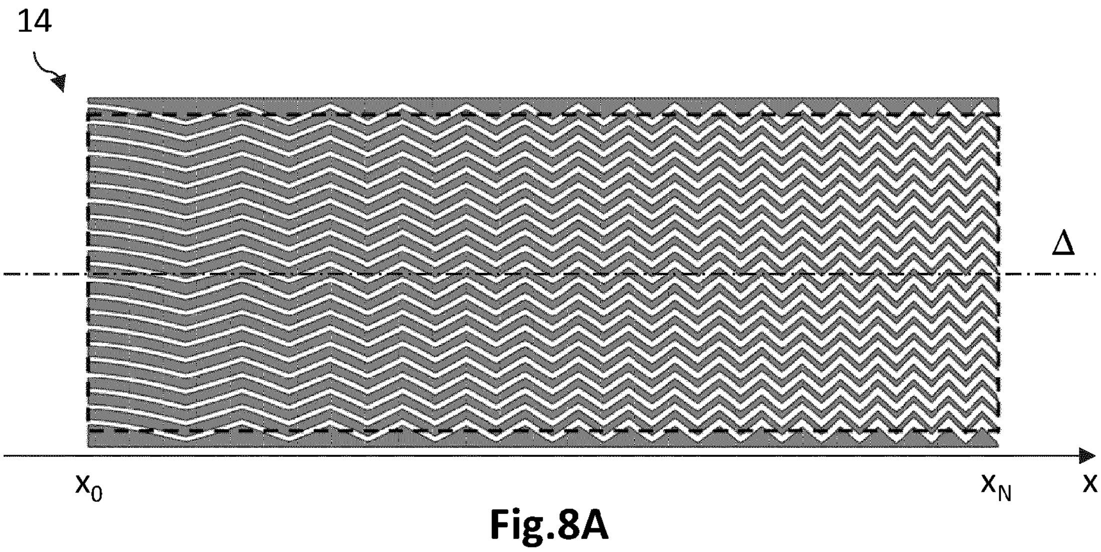


Fig.8A

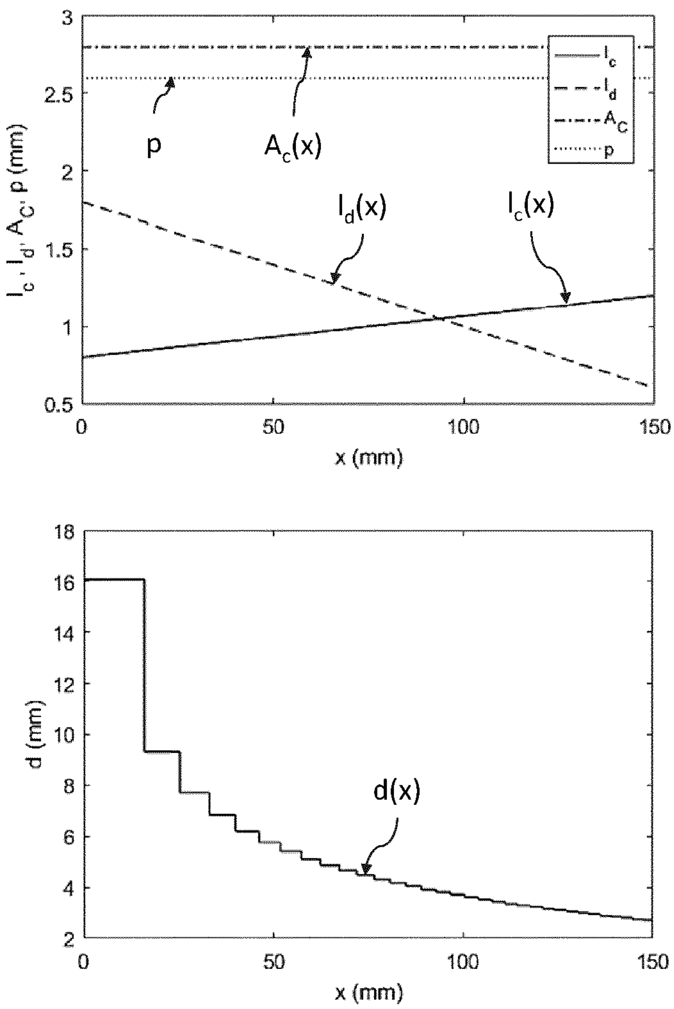


Fig.8B

Europäisches Patentamt
European Patent Office
Office européen des brevets

# RAPPORT DE RECHERCHE EUROPEENNE

Numéro de la demande
EP 20 15 0330

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/180052 A1 (LEGER DAVID E [CA] ET AL) 25 juin 2015 (2015-06-25)<br>* alinéa [0119]; figures 4A, AB *<br>----- | 1-15 | INV.<br>H01M8/026<br>H01M8/0263 |
| X | US 2005/153184 A1 (BEUTEL MATTHEW J [US] ET AL) 14 juillet 2005 (2005-07-14)<br>* revendication 3 *<br>----- | 1 | |
| A | US 2015/132680 A1 (ASANO YUJI [JP] ET AL) 14 mai 2015 (2015-05-14)<br>* revendication 4 *<br>----- | 1-15 | |

DOMAINES TECHNIQUES RECHERCHES (IPC)
H01M

1

Le présent rapport a été établi pour toutes les revendications

| Lieu de la recherche | Date d'achèvement de la recherche | Examinateur |
|---|---|---|
| Munich | 29 avril 2020 | Koessler, Jean-Luc |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 20 15 0330

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-04-2020

| Document brevet cité au rapport de recherche | Date de publication | Membre(s) de la famille de brevet(s) | Date de publication |
|---|---|---|---|
| US 2015180052 A1 | 25-06-2015 | CA 2919875 A1 | 20-02-2014 |
| | | CN 104718651 A | 17-06-2015 |
| | | CN 107579263 A | 12-01-2018 |
| | | CN 107591549 A | 16-01-2018 |
| | | GB 2519494 A | 22-04-2015 |
| | | US 2015180052 A1 | 25-06-2015 |
| | | WO 2014026288 A1 | 20-02-2014 |
| US 2005153184 A1 | 14-07-2005 | CN 1902772 A | 24-01-2007 |
| | | DE 112004002605 T5 | 02-11-2006 |
| | | JP 4668211 B2 | 13-04-2011 |
| | | JP 2007518239 A | 05-07-2007 |
| | | US 2005153184 A1 | 14-07-2005 |
| | | WO 2005069406 A2 | 28-07-2005 |
| US 2015132680 A1 | 14-05-2015 | JP 5903476 B2 | 13-04-2016 |
| | | JP 2015111558 A | 18-06-2015 |
| | | US 2015132680 A1 | 14-05-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20110159396 A
- US 20150180052 A1


### Littérature non-brevet citée dans la description


- **LI ; SABIT.** Review of bipolar plates in PEM fuel cells: Flow-field designs. *Int. J. Hydrog. Energy,* 2005, vol. 30, 359-371
- **ROBIN et al.** Development and experimental validation of a PEM fuel cell 2D-model to study heterogeneities effects along large-area cell surface. *Int. J. Hydrogen Energy,* 2015, vol. 40, 10211-10230
- **B. RANDRIANARIZAFY et al.** Design optimization of rib/channel patterns in a PEMFC through performance heterogeneities modeling. *International Journal of Hydrogen Energy,* 03 Mai 2018, vol. 43 (18), 8907-8926